(19) Europäisches Patentamt
European Patent Office
Office européen des brevets

(11) EP 0 775 165 B1

(12) # EUROPEAN PATENT SPECIFICATION

(45) Date of publication and mention of the grant of the patent:
**05.01.2000 Bulletin 2000/01**

(21) Application number: **96915111.7**

(22) Date of filing: **22.04.1996**

(51) Int Cl.7: **C08F 230/08**

(86) International application number:
**PCT/IB96/00520**

(87) International publication number:
**WO 96/35731 (14.11.1996 Gazette 1996/50)**

(54) **DADMAC/VINYL TRIALKOXYSILANE COPOLYMERS AND THEIR USE IN WASTEWATER TREATMENT**

COPOLYMERE VON DIALLYLDIMETHYLAMMONIUMCHLORID UND VINYLTRIALKOXYSILAN UND DEREN VERWENDUNG BEI DER BEHANDLUNG VON ABWÄSSERN

COPOLYMERES DU CHLORURE DE DIALLYLDIMETHYLAMMONIUM ET D'UN VINYLTRIALCOXYSILANE, ET LEUR UTILISATION POUR LE TRAITEMENT D'EFFLUENTS AQUEUX

(84) Designated Contracting States:
**AT BE DE DK ES FI FR GB IT NL PT SE**

(30) Priority:
**08.05.1995 US 438131**
**07.06.1995 US 485756**
**31.08.1995 US 521938**
**30.11.1995 US 565479**
**23.01.1996 US 589095**

(43) Date of publication of application:
**28.05.1997 Bulletin 1997/22**

(73) Proprietor: **NALCO CHEMICAL COMPANY**
**Naperville Illinois 60563-1198 (US)**

(72) Inventors:
- **CHUNG, Daniel, K.**
  **Burlington, Ontario L7P 4T3 (CA)**
- **COLLINS, John, H.**
  **Bloomingdale, IL 60108 (US)**
- **RAMESH, Manian**
  **Lisle, IL 60532 (US)**
- **SHETTY, Chandrashekar, S.**
  **Lisle, IL 60532 (US)**
- **SIVAKUMAR, Ananthasubramanian**
  **Naperville, IL 60563 (US)**
- **TUBERGEN, Karen, R.**
  **Mt. Prospect, IL 60056 (US)**

(74) Representative:
**Hartmann, Günter, Dr. Dipl.-Chem.**
**Ruschke Hartmann Becker**
**Pienzenauerstrasse 2**
**81679 München (DE)**

(56) References cited:
**EP-A- 0 377 188**
**FR-A- 2 388 838**
**US-A- 5 246 547**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 775 165 B1

## Description

### Field of the Invention

The invention is a water-soluble, surface active silicon-containing polyelectrolyte polymer and its use as coagulants for the control of pitch in pulp and paper mills; in clarifying ink-containing effluent water from recycled paper production; for removing color from a paper mill waste effluent containing color-bodies; for clarifying waste water containing turbidity-causing components; for a chemical treatment method that effectively removes fat, blood, tissue and other solids from food processing waste and for removing waste oil from industrial oily waste water. These polyelectrolyte polymers are silicon-containing copolymers of specific hydrophilic or hydrophobic monomers, preferably diallyl dimethyl ammonium halides, particularly diallyl dimethyl ammonium chloride and vinyl alkoxysilanes, preferably vinyl trimethoxysilane.

### Background of the Invention

The Applicants' invention is a novel polymer which may be applied to several different industries which require waste water treatment. Accordingly, the problems to be overcome in each industry will be examined in turn in this section.

### Pitch Deposit Control

Pitch in a papermaking system can be simply defined as the sticky, resinous material that is released from wood during the pulping process. In paper mill process waters, pitch exists as an unstable, colloidal dispersion of hydrophobic particles. Under the conditions often encountered in a papermaking system, such as hydrodynamic and mechanical shear forces, abrupt pH and temperature changes and exposure to water hardness ions and inorganic scale deposits, colloidal pitch particles tend to agglomerate and deposit on paper machine surfaces.

Pitch deposits often lead to quality defects in the finished paper product, shortened equipment life, impaired system operation, paper machine downtime and, ultimately, lost profits for the mill. These problems are magnified when a paper mill "closes up" its process water system, as many mills have already done for conservation and environmental reasons, thus eliminating many potential exit points for pitch in the system. A closed, recirculating papermaking process water system only has a limited holding capacity for hydrophobic materials like pitch. Unless these pitch particles are continuously removed from the system in a controlled manner, spontaneous system purges can occur which lead to pitch deposits and runability problems. Thus, the control of pitch deposition in a papermaking system is a priority for many papermakers.

A number of pitch deposit control methods are used in the paper industry. For example, optimizing the performance of the pulp washing stages (e.g., kraft brown stock washers and bleach plant extraction stages) through the application of pitch dispersants and defoamers or washaids to these stages is a control option for many mills. The removal of pitch through these viable exit points is especially important in closed papermaking systems. The use of pitch adsorbants such as talc are often employed; however, unless the talc/pitch particles are effectively retained in the paper sheet, talc can end up contributing to, rather than solving, the pitch deposit problem.

Alum is a widely used pitch control agent for acid papermaking systems. It acts by attaching pitch particles to fibers in a manner analogous to the setting of rosin size. Cationic coagulants promote the attachment of the anionically charged, colloidal pitch particles to fibers and fines through a charge neutralization mechanism. The advantage to using cationic coagulants and alum for pitch control is that pitch is removed from the system in the form of microscopic particles dispersed among the fibers in the finished paper product. Unlike alum, a polymer's cationic charge is not necessarily dependent on the pH of the system, thus cationic polymers can be used effectively in neutral and alkaline paper machines. In addition, cationic polymers remain soluble under normal alkaline papermaking conditions while alum can form insoluble aluminum hydroxide.

It is commonly thought that cationic polymer retention aids act purely by charge neutralization to allow the anionic pitch to deposit on the anionic wood fiber instead of the hydrophobic plastic surface of the headbox and other papermaking machine parts. Pitch is typically formed from fatty acids, sterols, fatty alcohols, alkylesters, and fatty triglycerides. Pitch is released from wood by both chemical and mechanical processing. Colloidal pitch is generated during chemical pulping, during refining and beating operations, and in minor amounts at various stages of pulp bleaching.

Pitch is considered as a dilute oil-in-water emulsion, stabilized in part by the surfactants (e.g., fatty and resin acids in their ionized forms) generated during the papermaking process. Chemicals added during processing can also contribute to the stabilization of this emulsion. Representative particle size distribution of the colloidal pitch in unbleached kraft, sulfite and groundwood pulps is found to be in the range of 0.2 to 2 μm. The total amount of colloidal

pitch in suspension has been reported to lie in the range of 5-70 ppm (by volume) for pulps at 1% fiber consistency.

Pitch is harmless if removed properly from the papermaking system by either washing the pitch to the sewer, or removing it with the sheet as microscopic particles. However, if the pitch is allowed to concentrate in a system, agglomeration begins, sheet defects and build-up on equipment ensue, and lost or downgraded production are the end result of not properly managing pitch that enters the papermaking system with the pulp.

One concern in the manufacture of paper is the removal of depositable pitch. Several mechanisms regarding the prevention of pitch deposition control have been suggested in the past. Three mechanisms that are commonly proposed to explain the phenomena of pitch deposition control are outlined below:

(1) a cationic polymer used for pitch control adsorbs onto the anionic pitch particles, and these "stabilized" pitch particles become "fixed" onto the fibers, thus reducing the concentration of "free" pitch particles in the process water;

(2) cationic polymers or talc are thought to act as a dispersed pitch stabilizer by adsorbing on the pitch particles and rendering them non-sticky; and

(3) consecutive treatment of machine parts with cationic and nonionic polymers renders them hydrophilic by forming a steric barrier to overcome Van der Waal's attraction forces.

The third mechanism not only inhibits pitch deposition, but also gives deposits which are easy to wash away.

Surface charge neutralization of colloidal pitch in the papermaking process water suspension can be enhanced by the use of a coagulant of polydiallyldimethyl ammonium chloride (DADMAC) which has been modified to incorporate a certain degree of hydrophobic nature.

Poly(DADMAC) was found by the present inventors to be active at the pitch particle/water interface, but not active at the air/water interface. The polymer brings about coalescence of the pitch particles such that they attain a size which enables them to be caught in the matrix of the pulp fibers. The increased size facilitates them being carried along with the pulp during the papermaking process much like the process of filtration. Contact angle measurements indicate that the polymers also have a tendency to adsorb on the solid surfaces rendering them hydrophilic. The hydrophilic nature of the surface inhibits the deposition of pitch particles on them.

Based upon the inventors' investigation of poly(DADMAC) it was discovered that a cationic polymer that had the ability to get to the pitch/water interface and simultaneously adsorb on hydrophobic surfaces (like Teflon®) would be effective in controlling the deposition of pitch. Contact angle measurements showed that poly(DADMAC) was not very effective in adsorbing onto hydrophobic surfaces.

The present inventors have synthesized a novel polyelectrolyte copolymer incorporating a silicon moiety onto the backbone of a polyelectroyte such as poly(DADMAC). This unique cationic and surface active polymer is advantageous over conventional polymers because it is capable of both increased surface activity, as evidenced by the lowering of the surface tension, and adsorption onto hydrophobic surfaces. Both of the aforementioned properties of this novel polymer facilitate its ability to inhibit pitch deposition during the papermaking process by adsorbing on surfaces and causing the pitch particles to attain a size so that they can be carried along with the paper.

U.S. Patent No. 5,246,547 (Finck et al.), which issued on September 21, 1993, discloses a hydrophobic polyelectrolyte which has been used for controlling pitch. This hydrophobic polyelectrolyte is formed by the copolymerization of DADMAC with a hydrophobic monomer, such as, dimethylaminoethyl (meth)acrylate benzyl chloride quaternary, dimethylaminoethyl (meth)acrylate cetyl chloride quaternary, and dimethylaminoethyl (meth)acrylate methyl chloride quaternary.

**Clarification of Deinking Process Water**

The production of recycled fiber has become an important element of the pulp and paper business. Advances in the technology of printing as well as the broadening of the scope of recyclable printed material present new challenges for recyclers. Thus, innovations in the deinking process must address the problems created by novel inks and print media. For example, the water-based inks which have evolved for use in flexographic newspaper printing present difficulties for recycling in that residual ink of this nature which passes through the deinking process causes a reduction in the brightness of recycled paper.

Conventional deinking (such as that used for newsprint deinking) is comprised of three distinct steps. First the ink is removed, or separated, from the paper fiber. This usually occurs while the waste paper is being repulped in water and is routinely aided by caustic and surfactant. Secondly, the separated ink is dispersed to a small particle size. The dispersion step usually occurs concomitantly with the separation step. In the third step, the dispersed ink is usually separated from the repulped fiber slurry by washing or flotation.

Efficient deinking demands both a successful separation of ink from the fiber and a successful separation ofthe ink dispersion from the fiber slurry. A deinking process that successfully separates the ink from the fiber and

successfully disperses the ink into the aqueous phase of the slurry as small particles will be inadequate if thereafter it does not provide effective removal of the ink from the fiber slurry. Dispersed ink particles that are carried along with the fiber in the slurry will in some degree be retained on the fiber during paper formation, resulting in a general gray hue or distinct spots, and commonly a low brightness.

Large volumes of water are required for the ink removal process. Clean-up of the ink laden process water is typically accomplished by a solid/liquid separation unit operation, such as Dissolved Air Flotation (DAF). Since recycle mills are frequently located in metropolitan areas, a great emphasis is placed on maintaining a closed water cycle in the mill. Effective clean-up of the DAF influent is important, for residual ink remaining in the water may be reintroduced to the fibers, resulting in a loss of brightness to the final sheet.

Clarification chemicals are typically used in conjunction with DAF units to remove the suspended solids from the deinking process waters. Often, deinking process waters have a large anionic character which requires the use of a dual polymer program for effective clean-up. A dual polymer treatment generally comprises a low molecular weight cationic coagulant in combination with a high molecular weight flocculant. Typical cationic coagulants are poly(diallyldimethylammoniumchloride), amphoteric diallyldimethylammoniumchloride containing copolymers, condensation polymers of ethylene dichloride/ammonia or dimethylamine/epichlorohydrin. Acrylamide-based flocculants have been utilized to assist in the solid/liquid separation. Both anionic and cationic flocculants can be employed.

It is common to coagulate the suspended solids contained in the deinking process waters by using as a coagulant a water soluble cationic polymer. One of the polymers that has met with some success is polydiallyldimethylammoniumchloride, hereafter poly(DADMAC). One of the drawbacks in using this coagulant is that it is relatively expensive and the dosages necessary to effectuate good coagulation are often excessive. If it were possible to provide a more effective coagulant other than poly(DADMAC), an improved clarification of waste deinking process waters would be afforded.

Noteworthy attempts which have improved the efficiency of diallyldimethylammonium-chloride as a deinking agent are disclosed in U. S. Pat. Nos. 4,715,962, 5,013,456 and 5,207,924. These patents show that certain amphoteric copolymers of diallyldimethylammoniumchloride with anionic monomers, such as acrylic acid, improve efficiency of poly(DADMAC) as a deinking water coagulant.

**Turbidity Reduction**

Many industrial processes require utilization of large amounts of water. In order to recycle this waste water, it must be treated before it can be reused. Effective recycling may include the removal of turbidity-causing components from the waste water.

Turbidity-causing components can be any organic or inorganic species of sufficient particle or droplet size to create a turbid, light-dispersed appearance in waste waters, industrial waters, or natural waters. These turbidity-causing components can be of an inorganic nature, an organic nature, a pigment dispersion, a colloidal humic material suspension, sewage components, or admixtures of any of the above in any ratio in waters of any description thereby obtaining a turbid translucent effect.

Turbid waters are any type of waters having dispersed therein any type of turbidity-causing component, as described above, or any other type of turbidity-causing component which might be similar in effect when dispersed in these types of waters. For example, colloidal matter of either organic or inorganic or even mixed organic and inorganic character can be turbidity-causing. Such components may vary greatly in nature and concentration, but generally contain a highly anionic surface charge which causes the colloidal particles to repel one another, thus remaining dispersed in the water, rather than settling out in a reasonable time frame.

Examples of turbid waters include waste waters expelled from hydrocarbon processing plants, waste waters expelled from chemical processing plants which synthesize various types of rubber latexes, and effluent waters expelled from various kinds of processing plants using materials containing emulsified components which are of a hydrocarbon nature. Further, the waste waters may be from automotive plants or machining plant operations.

A common method for removal of suspended solids from various types of turbid waters is by the well-known chemical process of clarification. The primary unit operations in clarification are coagulation combined with or followed by flocculation. Coagulation is defined as destabilization of the solids through neutralization of the surface charge on particles or droplets dispersed in the water. Flocculation is defined as the agglomeration or coalescence of small particles or droplets into larger particles or droplets usually through bridging, generally called floc.

A method of clarification usually comprises addition to the aqueous solution to be treated of certain chemical additives known as coagulants, mixing of the chemical additive and aqueous liquid whereby floc formation occurs, and subsequent removal of this floc by a variety of methods. In some cases, the addition of a second higher molecular weight water-soluble polymer, generally known as a flocculant may aid in the formation of floc. The removal of floc may be achieved by mechanical separation means or by merely allowing forces of gravity to work upon the agglomerated solids whereby a removable sludge layer is created.

Among effective coagulants for this purpose are water-soluble cationic polymers. These materials function by neutralizing the charge on the surface of the dispersed particles or droplets which allow the turbidity-causing materials present in turbid waters to agglomerate or coalesce, and to settle, or float to the top of the aqueous medium where they are collected and removed by techniques familiar to those skilled in the art.

For an example of effective coagulants, water-soluble cationic polymers in conjunction with polynuclear aluminum species for clarifying waters containing turbidity-causing components are disclosed in U. S. Patent No. 4,655,934. Another example which discloses the reaction products of phenol, formaldehyde, and low molecular weight polyamines useful for removing turbidity from low turbidity industrial waste waters is disclosed in U. S. Patent No. 4,308,149. However, more efficient processes for the removal of turbidity would represent an improvement over the prior art.

In addition to the removal of turbidity-causing components from waste water, many industrial processes necessitate removal of color before recycling of the water. Particularly, color removal from the effluent streams of paper mills presents a problem within the pulp and paper industry. It is necessary that these waste waters be treated for color removal prior to discharge.

The United States wood pulp production capacity is approximately 60 million tons per year. Since the average cellulose content of wood is about 40%, 150 million tons of wood are needed to produce this 60 million tons of pulp. The difference between these two numbers represents the lignin and hemicellulose which must be removed or separated in the pulping process in order to free the cellulose fibers.

The pulping process, however, does not remove 100% of the lignin present in the wood, with approximately 5% remaining after either Kraft or sulfite pulping (for mechanical pulping the amount is considerably higher). If a high grade paper is the desired end product, then this 5% residual lignin must be removed by bleaching the pulp.

Since over 35% of the pulp produced in the United States is bleached, there are about one million tons of lignin removed each year at the bleach plant, most of this in the caustic extraction stage. This number is significant because in the removal process (i.e., bleaching), most of this residual lignin is solubilized. This solubilized lignin is a strong absorber of visible radiation resulting from the conjugation of unsaturated and quinodal moieties formed during the oxidation step in the bleach plant. Consequently, the bleach plant effluent is highly colored. Although there are other sources of color in paper mill waste effluent, it is readily apparent that where bleaching is performed, its effluent can be expected to be the major contributor of waste color. Indeed, at Kraft bleach mills, the effluent from the first caustic extraction stage accounts for at least 70% of the waste color.

The goal of the pulping and bleaching operation is the removal of lignin and hemicellulose from the cellulose fiber in wood. The 95% that is removed by pulping is often burned as fuel in the process of recovering the inorganic chemicals present in the black liquor. In the bleaching operation, the 5% residual lignin is separated from the fibers by degradation and solubilization and ends up in the waste water. Chemical removal can therefore only be accomplished by reducing this solubility, which has proved to be a difficult task.

Therefore, the primary source of color in pulp is lignin. It has also been suggested that Kraft color is due to keto-enols produced from carbohydrates during the Kraft cook stage in the papermaking process. Chlorination of the pulp during the bleaching operation results in the formation of color bodies which are leached from the pulp by caustic alkali solutions. Thus, the caustic extract effluent contains a major proportion of the color bodies and the other organic materials which have to be disposed of during the waste water treatment.

The process of color removal from the effluent stream is further complicated by the presence of lime, solid particulate matter like pulp, clay, dispersant/surface active materials and polymers used during various stages in the papermaking process. The solid particulate matter is commonly referred to as anionic trash.

Most governmental regulations pertaining to color removal from the effluent stream of a papermaking process are directed to true color, i..e., platinum cobalt (Pt-Co) color using a DR2000 spectrophotometer). Nevertheless, there is increasing pressure on pulp and paper mills to lower the apparent color of the effluent water because that is the color visible to the naked eye. There are occasions when the true color of a system that has undergone treatment is low, but the corresponding apparent color is high. This problem is commonly caused by the presence of suspended particulate matter that causes an increase in the turbidity of the system. Therefore, it is important that any new treatment for color removal should not only remove the true color of the effluent, but should also lower the apparent color as well.

The pressure to remove color comes primarily from state environmental agencies. Previously, it was thought that the discharge of colored waste affected only the aesthetic value of the receiving body of water; however, biologists are becoming increasingly concerned about possible toxic effects, the effect of reduced light transmittance through the water causing reduced levels of photosynthetic activity, and of course, the resultant drop in dissolved oxygen concentration because of this drop in activity. Furthermore, although these colored, waste products are fairly refractory towards biological oxidation and since they become degraded in the aquatic environment, the oxidation products may be potentially harmful.

It has been shown that by-products are water soluble, and that a significant amount are produced. This puts severe demands on chemicals to be used for color removal. There are techniques already available, however, that

can remove greater than 90% of the color from either total mill effluent or isolated waste streams, such as from the caustic extraction stage of the bleach plant. These techniques include chemical (e.g., alum, ferric, lime or polyelectrolytes), biological (e.g., white rot fungus) and physical processes (e.g., ultrafiltration, ion exchange and carbon absorption). However, none of these techniques enjoys widespread use due to prohibitive cost.

Chemical techniques for the removal of color include a decolorizing composition consisting of ferrous sulfate and a water-soluble cationic copolymer of epichlorohydrin and dimethylamine as disclosed in U. S. Patent No. 5,200,089. Another example of a chemical treatment for the removal of color is a copolymer comprising diallyldimethyl ammonium chloride and a hydrophobic monomer selected from the group consisting of quaternized dimethylaminoethylacrylates and quaternized dimethylaminoethylmethacrylates as disclosed in U. S. Patent Nos. 5,338,816; 5,283,306; 5,292,793 and 5,314,627.

The demands on a product used in a color removal application are quite severe, i.e., the product must be capable of reacting with the color bodies in a manner which results in their becoming insoluble and, because of the extremely large amount produced, the color removal product must work at very low weight ratios relative to the organic being removed or its use will be precluded by prohibitive costs.

**Food Processing Waste Treatment**

Every day the food processing industry produces many tons of food processing waste. Such food processing waste contaminates the water stream flowing through the food processing system. For example, poultry farm waste water effluents are enriched with fat, oil, blood and other solids from the poultry process. These by-products, such as fat, blood, and tissue, are typically present in the waste water in a range of several hundred to tens of thousands of ppm.

For economic as well as regulatory reasons, the food processing community faces never-ending concerns regarding the disposal and recycling of food processing waste water. The removal of such by-products is critical from an environmental standpoint. In fact, the United States Environmental Protection Agency has placed tight restrictions on total oil and solids content in water that is to be discharged into public drinking water supplies or into open bodies of water.

The removal of such solids is also critical to the established discharge limits for total dissolved solids (TDS), chemical oxygen demand (COD), biological oxygen demand (BOD) and total organic carbon (TOC) into local sewers and rivers. In addition to the EPA's severe discharge limits, food processing industries must also be concerned with local city ordinances.

As an alternative to discharging treated water into a water stream or the like, recycling of the waste back into the processing system provides a cost efficient system. However, in order to recycle such waste water, the solids content and so forth must be effectively removed in order to provide pure water back into the system. Accordingly, the same concerns that are present with respect to the removal of such solids for EPA standards exist for recycling purposes as well.

One of the most effective methods of removing fat, blood, tissue and other solids in waste waters is through the use of chemical aids. Historically, dry polymers and inverse emulsion latexes have been used to treat food processing water. Each material has its own advantages and disadvantages. While dry polymers have the benefit of being extremely concentrated, thereby reducing shipping costs, the equipment to dissolve the polymers is expensive and is not available to all end-users on site. Dry polymers also have a large extent of cross-linking; thus, insoluble, gel materials are present.

Latex polymers also suffer from problems but are used quite frequently. Latex polymer preparations include 30-35% solids dispersed in oil. The latex polymer must be also inverted prior to use. Numerous problems associated with this feeding method have caused many customers to avoid latex polymers. In addition, the latexes generally have a very narrow treating range, often resulting in over-treatment at higher dosages.

Chemicals such as polyethylene oxide, polyethylene amine, polydiallyldimethylammonium chloride and copolymers of acrylamide and quaternized acrylates are specific types of chemical treatments that have been used in the food processing industry. Poly(DADMAC) used to clarify water is disclosed in U. S. Patent No. 3,409,547. DADMAC/acrylamide copolymers for use in water clarification have been disclosed in U. S. Patent Nos. 4,869,829; 4,396,513; 4,734,205; and 4,835,234. Hydrophobically modified DADMAC copolymers for the conditioning of food processing waste water have been disclosed in U. S. Patent No. 5,429,749.

While these chemical treatments have provided a means for removing food, blood, oil and other solids from the waste water, disadvantages exist with the use of such chemical treatments. For example, the above polymers have been traditionally synthesized in an oil solvent, thereby producing an environmentally unfriendly treatment program as well as presenting a potential fire hazard. In addition, chemical treatments incorporating the above polymers contain surfactants. Still further, these prior chemical treatments have a high toxicity thereby preventing the use of such treated waters for recycling purposes or for public drinking water supplies.

Therefore, a need exists for a treatment system that addresses all the environmental concerns presented by

food processing waste, while at the same time being environmentally friendly.

**Demulsification of Oily Waste Water**

In industry, oily waste waters are produced in various processes located in the steel and aluminum industries, chemical processing industry (CPI), automotive industry, laundry industry and refinery industry. In these industries, highly refined oils, lubricants and greases contact water for various purposes according to the particular industry. This results in a highly dispersed or severe oil-in-water emulsion in the waste water streams.

For example, in the steel and aluminum industries, waste water from steel and aluminum mills using hot rolling mills contain lubricating and hydraulic pressure hydrocarbons. Waste water from cold rolling mills contains oils that lubricates the sheets and reduces rust. Specifically, in cold rolling mills, oil-in-water emulsions are sprayed on the metal during rolling to act as coolants. Also, metalworking plants generate waste water streams containing lubricating and cutting oils, lapping and deburring compounds, grinding and other specialty fluids. These oils are generally highly refined hydrocarbons.

Refinery waste oil comes from two different sources: (1) Skimmings from the water clarification equipment, i.e., DAF's, API separators, and consisting mainly of crude oil; and, (2) Leakage from processes collected via traps and drains throughout the plant. This oil is usually sent to a waste water treatment plant.

One type of waste oil is formed during the process of removing dispersed oil from waste water in waste water treatment plants. The oil (called "float" or "skimmings") is concentrated in clarification vessels such as dissolved air floatation units (DAFs), induced gas floatation units (IGFs), corrugated plate interceptors (CPIs), and holding tanks. The oil floats to the top of these units, is removed by mechanical means and then stored. This waste oil may then be disposed of by incineration, sent to oil reclamation sites, or treated on-site. These waste oils have a minimum of 50% to 95% oil and contain emulsified water and solids which are stabilized by chemicals used to remove the oil from the waste water.

Waste waters from cotton and wool manufacturing plants contain oils and greases from the scouring, desizing and finishing operations. Finishing oils used in cotton and wool manufacturing to reduce friction and snagging of fibers on spinning machines end up in the waste water. Processes in other industries also generate oily waste water such as: paints, surface coatings, and adhesives; soaps and detergents; dyes and inks; and the leather industry. In each of the industries described above, the oils used in process ultimately contaminate waste water streams as highly dispersed or oil-in-water emulsions.

The emulsified oil in the waste water is typically present in the range of several hundred to tens of thousands of ppm. It is critical to remove this oil from an environmental standpoint. The United States Environmental Protection Agency has placed tight restrictions on total oil and grease (TOG) limits for water that is to be discharged into public drinking water supplies or into open bodies of water. The removal of this oil is very critical to the established discharge limits for total dissolved solids (TSS), carbon oxygen demand (COD), biological oxygen demand (BOD) and total organic carbon (TOC) into local sewers and rivers. Not only has the EPA established severe limits on the oil and grease discharge, these industries are affected by local city ordinances as well.

An emulsion is an intimate mixture of two liquid phases, such as oil and water, in which the liquids are mutually insoluble and where either phase may be dispersed in the other. An oily waste emulsion, in which oil is dispersed in the water phase, may contain any of a variety of oils in a wide range of concentrations. These oils are defined as substances that can be extracted from water by hexane, carbon tetrachloride, chloroform, or fluorocarbons: In addition to oils, typical contaminants of these emulsions may be solids, silt, metal particles, emulsifiers, cleaners, soaps, solvents, and other residues. The types of oils found in these emulsions will depend on the industry. They may be lubricants, cutting fluids, heavy hydrocarbons such as tars, grease, crude oils, and diesel oils, and also light hydrocarbons including gasoline, kerosene, and jet fuel. Their concentration in the waste water may vary from only a few parts per million to as much as 5 to 10% by volume.

A stable oil-in-water emulsion is a colloidal system of electrically charged oil droplets surrounded by an ionic environment. Emulsion stability is maintained by a combination of physical and chemical mechanisms.

Emulsions may be broken by chemical, electrolytic, or physical methods. The breaking of an emulsion is also called resolution, since the aim is to separate the original mixture into its parts. Chemicals are commonly used for the treatment of oily waste waters, and are also used to enhance mechanical treatment. In breaking emulsions, the stabilizing factors must be neutralized to allow the emulsified droplets to coalesce. The accumulated electric charges on the emulsified droplet are neutralized by introducing a charge opposite to that of the droplet. Chemical emulsion breakers provide this opposite charge, and are thus usually ionic in nature.

The treatment of oily waste water is normally divided into two steps, i.e., coagulation which is the destruction of the emulsifying properties of the surface active agent or neutralization of the charged oil droplet, and flocculation which is the agglomeration of the neutralized droplets into large, separable globules. The term oily waste water refers to an oil-in-water emulsion which may contain oil, dispersed solids, and water.

Traditionally, sulfuric acid has been used in oily waste treatment plants as the first step in emulsion breaking. Acid converts the carboxyl ion in surfactants to carboxylic acid, allowing the oil droplets to agglomerate. Chemical coagulating agents, such as salts of iron or aluminum, can be used in place of acid, with the additional benefit that these aid in agglomeration of the oil droplets. Some examples of inorganic emulsion breakers useful in oil-in-water emulsions are: polyvalent metal salts such as alum, $AlCl_3$, $FeCl_3$, and $Fe_2(SO_4)_3$, mineral acids such as $H_2SO_4$, HCl, and $HNO_3$, and adsorbents such as pulverized clay and lime. However, the aluminum or iron forms hydroxide sludges that are difficult to dewater. Acids generally break emulsions more effectively than coagulant salts, but the resultant acidic waste water must be neutralized after oil/water separation.

As described above, metal ions, such as, $Fe^{3+}$, $Zn^{2+}$, $Al^{3+}$, etc., have long been used to break oil-in-water emulsions, but recent government regulations have restricted their levels in discharged streams. Although effective at breaking oil-in-water emulsions, they too require another chemical to flocculate the oil.

Organic demulsifiers are extremely effective emulsion breaking agents, giving more consistent results and producing better effluent quality than an inorganic program. In many treatment plants, organic emulsion breakers have replaced traditional alum treatment for exactly those reasons. In addition to yielding a better quality effluent, organic emulsion breakers often require lower dosages than a corresponding inorganic treatment. Organic emulsion breakers reduce the amount of sludge generated in a treatment program by as much as 50 to 75%. Some examples of organic emulsion breakers useful in oily waste waters are polyamines, polyacrylates and their substituted copolymers.

Historically, dry polymers, solution polymers, and inverse emulsion latexes have been used to treat the waste water. Each material has its own advantages and disadvantages. While dry polymers have the benefit of being extremely concentrated, thereby reducing shipping costs, the equipment to dissolve the polymers is expensive and is not available to all end-users on site.

Water-in-oil emulsions of water-soluble vinyl addition polymers, referred to herein as latex polymers are used quite frequently, though they have several disadvantages. The first is that the latex polymer must be inverted prior to use, which complicates the process of feeding the polymer into the system. Numerous problems associated with this feeding method have caused many customers to avoid latex polymers. Additionally, the latexes generally have a very narrow treating range, often resulting in over-treatment at higher dosages. Furthermore, latex polymers add even more oil to the stream to be treated because latex polymer preparations include 30 - 35 % solids dispersed in oil. Of course, adding more oil to the system is undesirable when treating waste water streams.

Although solution polymers require no prior make up, percent solids and molecular weight characteristics of these polymers are severely limited due to the nature of the material. These materials are often used to break oil-in-water emulsions, but they are unable to flocculate the dispersed oil, thus requiring an adjunct chemical to complete the process.

The water-soluble polymers of the invention offer many solutions to these problems and represent a new method for industrial waste water demulsification. While no particular form of the polymer is crucial for activity, for ease of handling the solution form of the copolymer is preferred.

The present inventors have developed various novel hydrophobically modified polyelectrolyte copolymers which may be used as demulsifiers for oily waste waters. These cationically charged hydrophobically modified polymers, which incorporate into the polymer backbone a vinyl alkoxysilane, exhibit improved performance or activity in demulsification than do conventional inorganic and organic treatments. The unique cationic and surface active polymers of this invention are advantageous over conventional polymers because they are capable of both increased surface activity, as evidenced by lowered surface tension, and adsorption onto hydrophobic surfaces.

The advantages of the diallyldimethylammonium chloride/vinyl trialkoxysilane copolymers stem from the fact that they have the following characteristics: 1) silicon components are capable of forming networks with other silicon moieties, similar to crosslinking; and 2) incorporated silicon functionalities are capable of adhering or adsorbing to hydrophobic surfaces. The hydrophobically associating copolymers of the instant invention demonstrate enhanced performance with replacement ratios on the order of 0.35 - 0.50 over current commercially available poly(DADMAC) treatments.

## Summary of the Invention

The invention is a water-soluble, surface active silicon-containing polyelectrolyte polymer and its use as coagulants for the control of pitch in pulp and paper mills; in clarifying ink-containing effluent water from recycled paper production; for removing color from a paper mill waste effluent containing color-bodies; for clarifying waste water containing turbidity-causing components; for a chemical treatment method that effectively removes fat, blood, tissue and other solids from food processing waste and for removing waste oil from industrial oily waste water. These polyelectrolyte polymers are silicon containing copolymers of specific hydrophilic or hydrophobic monomers, preferably diallyl dimethyl ammonium halides, particularly diallyl dimethyl ammonium chloride and vinyl alkoxysilanes, preferably vinyl trimethoxysilane.

## BRIEF DESCRIPTION OF THE DRAWINGS

Fig. 1 is a schematic diagram showing the measurement of the contact angle on a test surface;
Fig. 2 is a graph plotting surface tension versus time for polyDADMAC with 500 ppm pitch at a pH of 6.5;
Fig. 3 is a graph plotting surface tension versus time for polyDADMAC with 1,000 ppm pitch at a pH of 6.5;
Fig. 4 is a graph plotting surface tension versus time for polyDADMAC with 1,500 ppm pitch at a pH of 6.5;
Fig. 5 is a graph plotting pitch deposit weight versus dosage for both polyDADMAC and polyDADMAC/VTMS (99.5/0.5); and
Fig. 6 is a graph plotting surface tension versus time for both polyDADMAC/VTMS (99.5/0.5) and polyDADMAC/VTMS (99/1).

## Description of the Invention

The invention is a surface active, silicon-containing polyelectrolyte copolymer comprising:

A. recurring units of at least one vinyl alkoxysilane monomer preferably being mono- or disubstituted and having preferably 1 to 3 $C_1$-$C_4$ alkyl groups in an amount of from 0.01 to 20 mole percent; and
B. recurring units of at least one second monomer selected from the group consisting of (meth)acrylamide, (meth) acrylic acid and its alkali metal salts, dimethylaminoethyl or propyl (meth)acrylate quaternary salt, diallyldimethyl ammonium halide, maleimide, vinyl formamide, vinyl acetate, itaconic acid, maleic anhydride, fumaric acid, aconic acid, (meth)acrylamido methyl propane sulfonic acid and its alkali metal salts, $C_6$ - $C_{20}$ alkyl esters of (meth)acrylic acid, phenethyl ester of (meth)acrylic acid, nonyl-α-benzyl ester of (meth)acrylic acid, dimethyl (meth)acrylamide, diethyl (meth)acrylamide, t-butyl (meth)acrylamide, dimethylaminoethyl (meth)acrylate quaternary salt, 3-methyl (meth)acrylamide propyl trimethyl ammonium halide, (meth)acrylamidomethyl butanoic acid and combinations thereof in an amount of from 99.99 to 80 mole percent, the polyelectrolyte copolymer having a reduced specific viscosity in one molar sodium nitrate solution containing 1% polymer actives of from 0.1 to 8 dl/g.

Whenever the expressions "(meth)acrylamide", "(meth)acrylic acid" and "(meth)acrylate" are used in the present application they represent "methacrylamide and acrylamide", "methacrylic acid and acrylic acid" and "methacrylate and acrylate", respectively.
The invention is also the above copolymer wherein the vinyl alkoxysilane monomer is selected from the group consisting of vinyltrimethoxysilane and vinyl triethoxysilane;

the above copolymer wherein the quaternary salt of component (B) is a $C_1$ to $C_{20}$ moiety selected from the group consisting of alkyl, aryl and alkylaryl;
the above copolymer wherein the quaternary salt is a methyl halide quaternary salt, preferably a methylchloride quaternary salt, or a benzyl halide quaternary salt, preferably a benzyl chloride quaternary salt;
the above copolymer wherein the ammonium halide salt of component (B) is an ammonium chloride, ammonium bromide or ammonium iodide salt, preferably an ammonium chloride salt;
the above copolymer wherein the mole ratio of component (A) to component (B) ranges from (0.1 to 15):(99.9 to 85), preferably from (0.1 to 5.0):(99.9 to 95), more preferably from (0.5 to 4):(99.5 to 96), most preferably from (0.5 to 2):(99.5 to 98);
the above copolymer having a reduced specific viscosity in one molar sodium nitrate solution containing 1 percent polymer actives of from 0.5 to 5 dl/g, preferably of from 0.7 to 3.0 dl/g;
the above copolymer comprising as component (A) recurring units of a diallyl dimethyl ammonium halide, preferably of diallyldimethyl ammonium chloride, and as component (B) recurring units of vinyl alkoxysilane, preferably vinyl trimethoxysilane or vinyl triethyloxysilane;
the above copolymer which is made by free radical polymerization;
the above copolymer wherein said second monomer is selected from the group consisting of hydrophilic monomers and hydrophobic monomers;
the above copolymer wherein said hydrophilic monomer is selected from the group consisting of: acrylamide, acrylic acid and its alkali metal salts, quaternary acrylates, diallyldimethyl ammonium chloride, maleimide, vinyl formamide, itaconic acid, maleic anhydride, fumaric acid, aconic acid, acrylamido methyl propane sulfonic acid and its alkali metal salts;
the above copolymer wherein said hydrophobic monomer is either a hydrophobic water insoluble monomer or a hydrophobic water soluble monomer;

the above copolymer wherein said hydrophobic water insoluble monomer is selected from the group consisting of: higher alkyl esters of acrylic acid and alkylaryl esters of acrylic acids; and
the above copolymer wherein said hydrophobic water soluble monomer is selected from the group consisting of: acrylic esters, alkyl acrylamides, dimethylaminoethyl acrylate benzyl chloride quaternary, 3-methylacrylamide-propyltrimethyl ammonium chloride, and acrylamdidomethyl butanoic acid.

The invention is also a surface active water-soluble polyelectrolyte polymer made by free radical polymerization of 0.01 to 10 mole percent of a vinyl alkoxysilane monomer, and from 90 to 99.99 mole percent of a monomer selected from the group consisting of dimethylaminoethyl or propyl acrylate methyl chloride quaternary, diallyldimethyl ammonium chloride, dimethylaminoethylacrylate benzyl chloride quaternary, 3-methylacrylamide propyl trimethyl ammonium chloride, and combinations thereof.
The invention is also the above surface active water-soluble polyelectrolyte polymer wherein the vinyl alkoxysilane monomer is selected from the group consisting of vinyl trimethoxy silane and vinyl triethoxysilane;

the above surface active water-soluble polyelectrolyte polymer wherein the vinyl alkoxysilane monomer is trimethoxysilane and the second monomer is diallyldimethyl ammonium chloride;
the above surface active water-soluble polyelectrolyte polymer wherein the mole ratio of diallyldimethyl ammonium chloride to vinyl trimethoxy silane ranges from 99.9:0.1 to 90:10; and
the above surface active water-soluble polyelectrolyte polymer wherein the mole ratio of diallyldimethyl ammonium chloride to vinyl trimethoxy silane ranges from 99.9:0.01 to 95.0:5.0.

The invention is also the use of said polyelectrolyte copolymer in a method for clarifying ink-containing effluent water from recycled paper production which method comprises adding, as a coagulant, to the ink-containing effluent water from recycled paper production an effective deinking amount of the copolymer as described above preferably of a water-soluble, surface active, silicon-containing polyelectrolyte copolymer being made by free radical polymerization and comprising:

A. from 0.01 to 10 mole percent of a vinyl alkoxysilane monomer; and
B. from 99.99 to 90 mole percent of a second monomer selected from the group consisting of acrylamide, acrylic acid and its alkali metal salts, dimethylaminoethyl or propylacrylate methyl chloride quaternary, diallyldimethyl ammonium chloride, maleimide, vinyl formamide, vinyl acetate, itaconic acid, maleic anhydride, fumaric acid, aconic acid, acrylamido methyl propane sulfonic acid and its alkali metal salts, $C_6$ to $C_{20}$ alkyl esters of acrylic acid, phenethyl ester of acrylic acid, nonyl-$\alpha$-benzyl ester of acrylic acid, dimethyl acrylamide, diethyl acrylamide, t-butyl acrylamide, dimethylaminoethylacrylate benzyl chloride quaternary, 3-methylacrylamide propyl trimethyl ammonium chloride, acrylamidomethyl butanoic acid and combinations thereof.

Further, the invention is a method wherein the vinyl alkoxysilane monomer is selected from the group consisting of vinyltrimethoxysilane and vinyl triethoxysilane and the second monomer is diallyldimethyl ammonium chloride;

the above method wherein the copolymer is added to said ink-containing effluent water in an amount of from 0.25 to 100 ppm, preferably from 0.5 to 75 ppm, most preferably from 1 to 50 ppm;
the above method wherein the reduced specific viscosity of the copolymer in one molar sodium nitrate solution for one percent polymer actives is from 0.1 to 4 dl/dm, preferably from 0.5 to 3 dl/gm, most preferably from 0.8 to 2.5 dl/gm;
the above method wherein the mole ratio of diallyldimethyl. ammonium chloride to vinyltrimethoxysilane ranges from 99.99: 0.01 to 95.0:5.0;
the above method further comprising the addition of a flocculant to said effluent water; and
the above method wherein said flocculant is a copolymer of acrylamide and acrylic acid.

Further, the invention is the use of said polyelectrolyte copolymer in a method of removing waste oil from industrial oily waste water which includes oil, dispersed solids and emulsified water, the method comprising the steps of:

A. treating the oily waste water with an effective amount of the copolymer as described above, preferably of a copolymer of diallyldimethyl ammonium halide and a vinyl alkoxysilane, as a demulsifier;
B. allowing the oil, emulsified water and dispersed solids to flocculate and separate into layers; and then
C. removing the water layer from the treated waste water.

The invention is also the above method wherein the diallyldimethyl ammonium halide is diallyldimethyl ammonium

chloride and the vinyl alkoxysilane is vinyl trimethoxysilane;

the above method wherein the demulsifier has a reduced specific viscosity in one molar sodium nitrate solution for one percent polymer actives of from 0.2 to 5.0 dl/gm, preferably of from 0.5 to 4.0 dl/gm, most preferably of from 0.7 to 3.0 dl/gm;
the above method wherein the mole ratio of diallyldimethyl ammonium chloride to vinyl trimethoxysilane ranges from 99.9:0.01 to 80:20, preferably from 99.9:0.1 to 85:15, most preferably from 99.9:0.1 to 95.0:5.0; and
the above method wherein the effective amount of the demulsifier added to the oily waste water is at least 0.005 % by weight, preferably at least 0.05 by weight, most preferably at least 0.1 % by weight of said fluid.

The invention is the use of said polyelectrolyte copolymer in a method for conditioning food processing waste water prior to chemical dewatering comprising the step of treating the food processing waste water with an effective amount of the copolymer as described above, preferably of a water-soluble silicon-containing polymer prepared from diallyldimethyl ammonium halide and a vinyl alkoxysilane, as a coagulant;

the above method wherein the diallyldimethyl ammonium halide is diallyldimethyl ammonium chloride and the vinyl alkoxysilane is vinyl trimethoxysilane;
the above method wherein the coagulant has a reduced specific viscosity in one molar sodium nitrate solution for one percent polymer actives of from 0.2 to 8 dl/gm, preferably from 0.5 to 5.0 dl/gm, most preferably from 0.7 to 3.0 dl/gm;
the above method wherein the mole ratio of diallyldimethyl ammonium chloride to vinyltrimethoxysilane ranges from 99.99:0.01 to 80:20, preferably from 99.9:0.1 to 85:15;
the above method including the further step of adding a flocculant to the treated food processing waste water; and
the abvoe method wherein the food processing waste water is treated with from 1 to 500 ppm, preferably from 10 to 300 ppm, most preferably from 20 to 100 ppm of the coagulant.

The invention is also a process for removing color from a paper mill waste effluent containing color bodies which comprises:

A. treating the waste effluent containing color bodies with an effective color-removing amount of the copolymer as described above, preferably of a water-soluble silicon-containing copolymer prepared from diallyldimethyl ammonium halide and a vinyltrialkoxysilane, as a coagulant;
B. coagulating the color bodies present in the waste effluent; and then
C. removing the coagulated color bodies from the waste effluent.

The invention is also the above method wherein the diallyldimethyl ammonium halide is diallyldimethyl ammonium chloride and the vinyl alkoxysilane is vinyl trimethoxysilane;

the above method wherein the coagulant has a reduced specific viscosity in one molar sodium nitrate solution for one percent polymer actives of from 0.2 to 5 dl/gm, preferably from 0.5 to 4.0 dl/gm, most preferably from 0.7 to 3.0 dl/gm;
the above method wherein the mole ratio of diallyldimethyl ammonium chloride to vinyl trimethoxysilane ranges from 99.99:0.01 to 80:20, preferably from 99.9:0.1 to 85:15, most preferably from 99.9:0.10 to 95.0:5.0;
the above method wherein the papermill waste effluent is treated with from 1 to 500 ppm, preferably from 30 to 200 ppm, most preferably from 50 to 120 ppm of the coagulant;
the above method further comprising the addition of a flocculant to said waste water; and
the above method wherein said flocculant is a copolymer of acrylamide and acrylic acid.

Further, the invention is the use of said polyelectrolyte copolymer in a method for clarifying waste water containing turbidity-causing components which comprises:

A. adding to said water an effective turbidity-reducing amount of the copolymer as described above, preferably of a water-soluble silicon-containing copolymer prepared from diallyldimethyl ammonium halide and vinyl trialkoxysilane, as a coagulant;
B. mixing said copolymer and said water with a mechanical stirring device for sufficient time to allow flocculation of the turbidity-causing components; and then
C. separating the flocculated turbidity-causing components from the waste water to obtain clarified water.

The invention is also the above method wherein the diallyldimethyl ammonium halide is diallyldimethyl ammonium chloride and the vinylalkoxysilane is vinyl trimethoxysilane;

the above method wherein the coagulant has a reduced specific viscosity in one molar sodium nitrate for one percent polymer actives of from 0.2 to 5 dl/gm, preferably from 0.5 to 4.0 dl/gm, most preferably from 0.7 to 3.0 dl/gm;
the above method wherein the mole ratio of diallyldimethyl ammonium chloride to vinyl trimethoxysilane ranges from 99.99:0.01 to 80:20, preferably from 99.9:0.1 to 85:15, most preferably from 99.9:0.10 to 95.0:5.0;
the above method wherein the waste water is treated with from 0.1 to 500 ppm, preferably from 0.5 to 100 ppm, most preferably from 2 to 30 ppm of the coagulant; and
the above method further comprising the addition of a flocculant to said waste water; and
the above method wherein said flocculant is copolymer of acrylamide and acrylic acid.

The invention is also the use of said polyelectrolyte copolymer in a method for controlling pitch in papermaking systems which comprises adding to the pulp and paper process water in an amount between 0.4 and 4 pounds per ton (0.5 to 5.0 kg/t) of dry pulp, as a coagulant.

The invention is also the above method wherein said second monomer and said vinyl siloxane monomer are present in a molar ratio in the range between about 99.99:0.01 and about 90:10;

the above method wherein said hydrophilic monomer is selected from the group consisting of: acrylamide, acrylic acid and its alkali metals salts, quaternary acrylates, diallyldimethyl ammonium chloride, maleimide, vinyl formamide, itaconic acid, maleic anhydride, fumaric acid, aconic acid, acrylamido methyl propane sulfonic acid and its alkali metals salts;
the above method wherein said hydrophobic monomer is either a hydrophobic water insoluble monomer or a hydrophobic water soluble monomer;
the above method wherein said hydrophobic water insoluble monomer is selected from the group consisting of: higher alkyl esters of acrylic acid and alkylaryl esters of acrylic acids;
the above method wherein said hydrophobic water soluble monomer is selected from the group consisting of: acrylic esters, alkyl acrylamides, dimethylaminoethyl acrylate benzyl chloride quaternary, 3-methylacrylamidepropyltrimethyl ammonium chloride, and acrylamidomethyl butanoic acid;
the above method wherein said vinyl alkoxysilane monomer is capable of radical polymerization and is selected from the group consisting of: vinyl trimethoxysilane and vinyl triethoxysilane; and
the above method wherein said hydrophobic polyelectrolyte copolymer is added to said pulp and paper process water in an amount between about 0.4 and about 4 pounds per ton (0.5 to 5.0 kg/t) of dry pulp.

The present invention pertains to a novel hydrophobic polyelectrolyte copolymer which comprises a first monomer selected from the group consisting of hydrophilic monomers and hydrophobic monomers, and a vinyl siloxane monomer. The first monomer and vinyl siloxane monomer are preferably present in a molar ratio in the range between about 99.99:0.01 to about 90:10.

The vinyl siloxane monomer is reacted with either a hydrophilic monomer or a hydrophobic monomer in accordance with the below reaction wherein, for example, a diallyldimethylammonium chloride (DADMAC) monomer is reacted with vinyl trimethoxy silane (VTMS) in the presence of an initiator and water at a temperature in the range of between about 45°C to about 82°C:

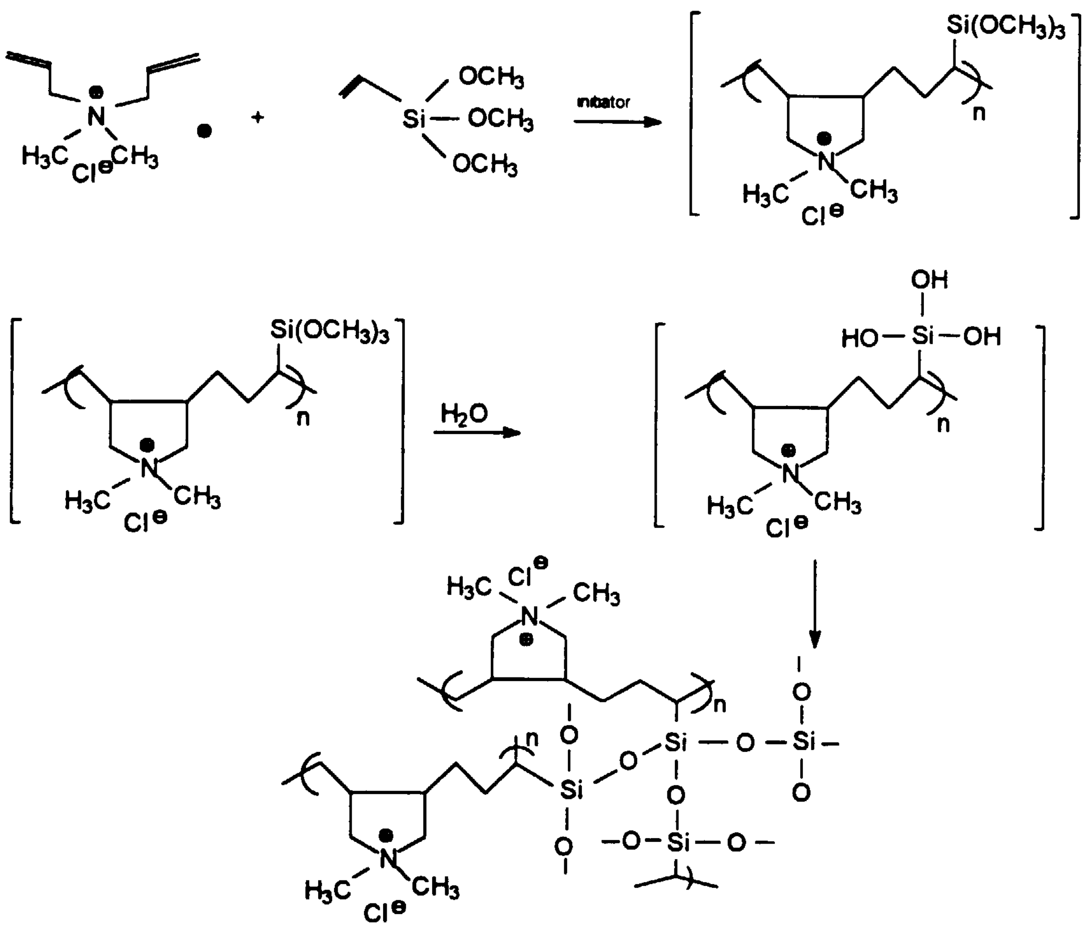


(1)

(2)

The hydrophilic monomer can be any one of the following: acrylamide, acrylic acid and its alkali metal salts, quaternary acrylates such as dimethylaminoethyl or propyl acrylate methyl chloride quaternary, diallyldimethylammonium chloride, maleimide, vinyl formamide, itaconic acid, maleic anhydride, fumaric acid, aconic acid, acrylamido methyl propane sulfonic acid and its alkali metal salts.

The hydrophobic monomer is preferably any hydrophobic water insoluble or water soluble monomer.

Hydrophobic water insoluble monomers are preferably any of the following: higher alkyl esters of acrylic acid, alkylaryl esters of acrylic acids such as nonyl-$\alpha$-phenyl acrylate.

Hydrophobic water soluble monomers are preferably any of the following: alkyl acrylamides, dimethylaminoethyl acrylate benzyl chloride quaternary, vinyl acetate, 3-methylacrylamidepropyltrimethyl ammonium chloride, acrylamidomethyl butanoic acid, and acrylic esters such as methyl acrylate, ethyl acrylate, and ethyl hexyl acrylate.

The vinyl siloxane monomer is preferably a vinyl trialkoxy silane such as vinyl trimethoxy silane or vinyl triethoxy silane.

The vinyl alkoxysilane monomers useful in the copolymer composition of the invention contain an alkyl group of from I - 4 carbon atoms. As such vinyl trimethoxy, triethoxy, tripropoxy and tributoxysilanes, and combinations thereof, may find use in the subject invention. While vinyl trialkoxysilanes are preferred, the monomers may be mono or disubstituted as well, or mixtures of mono-, di- and tri-alkoxy substituted silanes may be used. A preferred vinyl trialkoxysilane for use in this invention is vinyltrimethoxysilane, commercially available from Hüls America, Piscataway, New Jersey and Dow Corning Corporation; Midland, Michigan.

Useful vinylalkoxysilanes may include vinyltrimethoxysilane, vinyltriethoxysilane, vinyltris($\beta$-methoxyethoxy) silane, vinyltriacetoxysilane, allyltrimethoxysilane, allyltriacetoxysilane, vinylmethyldimethoxysilane, vinyldimethoxyethoxysilane, vinylmethyldiacetoxysilane, vinyldimethylacetoxysilane, vinylisobutyldimethoxysilane, vinyltriisopropoxysilane, vinyltri-n-butoxysilane, vinyltrisecbutoxysilane, vinyltrihexyloxysilane, vinylmethoxydihexyloxysilane, vinyldimethoxyoctyloxysilane, vinylmethoxydioctyloxysilane, vinyltrioctyloxysilane, vinylmethoxydilauryloxysilane, vinyldimethoxylauryloxysilane, vinylmethoxydioleyloxysilane, vinyldimethoxyoleyloxysilane, and polyethyleneglycolmodified vinylsilane represented by the formula

$$CH_2=CH\overset{R^1_m}{\overset{|}{Si}}[(OCH_2CH_2)_x-OH]_{3-m}$$

(where $R^1$ and m are as defined above, and x is 1 to 20.)

Diallyldimethylammonium halides, especially diallyldimethylammoniumchloride (DADMAC) are well-known and commercially available from a variety of sources. One method for the preparation of DADMAC is detailed in U. S. Patent No. 4,151,202, the disclosure of which is hereinafter incorporated by reference into this specification.

The mole ratio of DADMAC to the vinyl trialkoxysilane ranges from 99.99:0.01 to 90:10. Most preferably, the mole ratio of DADMAC to the vinyl trialkoxysilane range from 99.99:0.01 to 95.0:5.0.

The polymers may be prepared as in conventional vinyl polymerization techniques. These techniques include conventional solution polymerization in water, and polymerization in water-in-oil emulsion form, such as that described in U. S. Patent No. 3,624,019, the disclosure of which is hereinafter incorporated by reference into this specification. The polymers of the invention may also be prepared in so-called dispersion form, such as that described in U.S. Patents No. 4,929,655 and 5,006,590 the disclosures of which is also hereinafter incorporated by reference into this specification. The polymers of the instant invention may be in solid, dispersion, latex or solution form.

Conventional free radical catalysis may be used, including both free radical initiators and redox systems. Such polymerizations are within the purview of those skilled in the art and as such will not be elaborated on in this specification.

The molecular weights of the copolymer prepared hereunder can vary greatly. Generally, copolymers of diallyldimethylammoniumchloride and vinyltrimethoxysilane produced hereunder will have a molecular weight of from 50,000 to 5,000,000, and preferably 75,000 to 2,500,000, and most preferably from 100,000 to 1,000,000. The polymers of this invention will accordingly have a reduced specific viscosity for a one percent by weight polymer solution as measured in one molar sodium nitrate of from 0.1 - 4 dl/gm and preferably from 0.5 - 3.0 dl/gm. A most preferred reduced specific viscosity range is from 0.8 - 2.5 dl/gm. While discussed herein as copolymers of diallyldimethylammonium halides and vinyl alkoxysilanes, other monomers may be incorporated into the resultant polymers without detracting from the spirit and intent of the invention. Possible monomers that may be incorporated include, but are not limited to nonionic and cationic vinyl monomers. These materials are exemplified by acrylamide, and such cationic monomers as dimethylaminoethylmethacrylate and dimethylaminoethyl acrylate and their respective water soluble quaternary amine salts.

The polymer initiator is preferably selected from the group consisting of: 2,2'-azobis(2-amidinopropane) hydrochloride (V50), 2,2'-azobis(N,N'-dimethyleneisobutyramidine)dihydrochloride (VA-044), ammonium persulfate, and ammonium persulfate/sodium meta bisulfite.

The hydrophilic monomer is selected from the group consisting of: acrylamide, acrylic acid and its alkali metal salts, acrylic esters, ethyl acrylate, quaternary acrylates, diallyldimethylammonium chloride, maleimide, vinyl formamide, itaconic acid, maleic anhydride, fumaric acid, aconic acid, acrylamido methyl propane sulfonic acid and its alkali metal salts.

The vinyl siloxane monomer is one which is capable of radical polymerization. Preferred vinyl siloxane monomers are any vinyl trialkoxy silane monomer such as vinyl trimethoxy silane and vinyl triethoxy silane.

This unique hydrophobic polyelectrolyte copolymer has been demonstrated in the examples below to act as an effective coagulant in controlling pitch in papermaking systems. The hydrophobic polyelectrolyte copolymer coagulant is preferably added to the pulp and paper process water in an amount between about 0.4 to about 4 pounds per ton of dry pulp, more preferably 0.4 to 2.0 pounds per ton of dry pulp.

The present inventors have developed a new class of coagulants which exhibit enhanced performance for the clarification of ink-containing effluent water from recycled paper production. These coagulants are copolymers of DADMAC and trialkoxysilanes.

The ink-containing effluent waters are preferably treated with coagulants and optionally with flocculants. It has been discovered that surface charge neutralization of ink particles in the materials to be recycled can be enhanced by the use of a copolymer which has been modified to incorporate a certain degree of hydrophobicity. Such a modification can be accomplished by copolymerizing a diallyldimethylammonium halide, particularly diallyldimethylammoniumchloride (DADMAC ) with vinyl alkoxysilane, preferably vinyltrimethoxysilane.

The copolymers of this invention may be used alone, or in combination with a high molecular weight anionic, cationic or non-ionic water soluble or dispersible flocculant. Such polymers include polyacrylamide, and copolymers of acrylamide with acrylic acid and its water soluble alkali metal or ammonium salts. As used herein, the term acrylic acid is meant to encompass such water soluble salts. Also useful are such polymers as sulfo-methylated acrylamides as exemplified in U. S. Patent Nos. 5,120,797 and 4,801,388, the disclosures of which are hereinafter incorporated by reference into this specification. Other commercially available anionic flocculant materials may also be utilized.

A preferred class of flocculants for use in this invention includes copolymers of acrylamide and acrylic acid

having a mole ratio of acrylamide to acrylic acid of from 99:1 to 1:99 and preferably 99:1 to 50:50. Most preferably, the mole ratio of acrylamide to acrylic acid will be 95:5 to 60:40. An especially preferred flocculant for use in this invention has a mole ratio of acrylamide to acrylic acid of about 70:30.

The flocculants of this invention may be prepared in solution form, or in water-in-oil emulsion form. The preparation of such flocculants is known to those skilled in the art. The flocculants generally have molecular weights ranging from as low as 1,000,000 to 40,000,000 or higher. Preferred flocculants have a molecular weight of about 10,000,000. The upper limit of molecular weight is not critical so long as the polymer is water soluble or dispersible.

The flocculant is believed to cause the aggregation of the neutralized colloidal particles which are suspended in the effluent water. Aggregation is the result of either entrapping agents (i.e., inorganic flocculants) or bonding agents (i.e., organic flocculants) bringing the neutralized particles together.

The copolymer of diallyldimethylammoniumchloride and vinyltrialkoxysilane is generally added to the effluent water at a rate of 0.25 - 100 ppm (on an actives basis), based on the weight of deinking process water. A preferred dosage range is 0.5 - 75 ppm with a most preferred range being 1 - 50 ppm. The amount of coagulant will vary according to the particular effluent stream and it is understood that routine experimentation in any particular case will be required to ascertain the optimum dosage. Flocculant may also be added in an effective amount, generally between about 0.5 - 10 ppm. The polymers of the invention are preferably added to the system in solution form prior to the DAF unit while the flocculants are added to the DAF unit following dissolved air injection.

The optimal amounts of the various components required for effectiveness in this invention depend on the type of inks present in the process waters. For the most part, recycled papers are printed with hydrophobic, oil-based letter press or offset inks. These printing inks consist of high viscosity mineral oils, carbon black, specialty additives, and colophonium derivatives and/or alkylated resins as binders. A growing percentage of materials are printed with water-based (flexographic) inks. Flexographic inks utilize acrylic resins as their binders. As such, these resins become soluble under typical deinking operations and behave quite differently from the conventional oil-based inks during the recycling process. This poses a significant problem for water clarification treatments. In addition, the concentration of the combined components varies greatly and can depend upon the conditions such as temperature pH and the amount of suspended solids.

The waste water containing turbidity-causing components is treated with from 0.1 to 500 parts per million of the water-soluble silicon-containing copolymer coagulant. Preferably, the waste water is treated with from 0.5 to 100 parts per million of the water-soluble silicon-containing copolymer coagulant. Most preferably, the waste water is treated with from 2 to 30 parts per million of the water-soluble silicon-containing copolymer coagulant.

The food processing waste waters are preferably treated with coagulants and optionally with flocculants. It has been discovered that surface charge neutralization of colloidal particles in the mineral slurries can be enhanced by the use of a copolymer which has been modified to incorporate silicon moities. Such a modification can be accomplished by copolymerizing a diallyldimethylammonium halide, particularly diallyldimethylammonium chloride (DADMAC ) with vinyl alkoxysilane, preferably vinyl trimethoxysilane.

In an embodiment, the method of the present invention includes the further step of adding an effective amount of a precipitant to the food processing waste. The precipitant component of the present invention facilitates the removal of unwanted chemicals within the final effluent. Naturally, the particular type of precipitant chosen depends on the particular constituent that is to be removed from the food processing waste.

Pursuant to the method of the present invention, food processing waste can be purified and an environmentally friendly water is simultaneously obtained. In an embodiment, the method of the present invention involves the addition of at least one hydrophobically modified polymer flocculant to the food processing waste. While the sole addition of the hydrophobically modified polymer flocculant effectively conditions the food processing waste prior to mechanical dewatering, the combined addition of a coagulant and precipitant provides a complete chemical treatment method.

The optimal amounts of the various components required for effectiveness in this invention depend on the type of food processing waste being treated. In addition, the concentration of the combined components varies greatly and can depend upon the conditions such as temperature and pH of the food processing waste.

According to the method, the silicon containing polymers of the present invention are added to a food processing waste water stream. In an embodiment, the polymers are added in an effective amount of from 1 to 500 ppm. In a more preferred embodiment, the polymers are added in an effective amount of from 5 to 200 ppm. In the most preferred embodiment, the polymers are added in an amount of from 20 to 100 ppm.

The silicon containing coagulants of the present invention can be applied to food processing waste slurry, stored or screened solids, or to filtrate produced by dewatering. In an embodiment, the coagulant, followed by a flocculant, is directly injected into the food processing waste. The coagulant may be added with or without a dilution system. The polymers of the invention are preferably added to the system in neat form. However, in some applications, the polymers can be added as an aqueous solution. The active polymer bridges suspended solids leading to optimal dewatering of solids as well as optimal clarification of filtrate liquors.

Once the polymers of the invention are added to the waste water stream, the treated water is naturally agitated

as it moves through the process stream of the food processing plant. The polymers of the invention will cause the fat, blood, tissue and the like to separate from the water and float to the surface of the water as a floc. The floc is subsequently removed from the surface of the water and handled further. The treated water can now be discharged either into a river, lake or recycled into an industrial process.

For a complete chemical treatment system, a second coagulant and a precipitant may also be added to the food processing waste water. In an embodiment, the second coagulant component of the present invention is added in an effective amount of from 0.01 to 2 ppm. Whereas, in an embodiment, the precipitant component of the present invention is added in an effective amount of from 5 to 100 ppm. The second coagulant portion of the present invention is preferably applied to the filtrate produced by dewatering of the food processing waste slurry, or to food processing waste. The precipitant portion of the present invention is preferably applied neat direct to the filtrate or food processing waste. The precipitants not only facilitate the removal of unwanted chemicals but also allow optimal coagulation and settlement of solids.

Examples of suitable second coagulants that may be used in the present invention include: ferric sulfate, ferrous sulfate, aluminum sulfate, aluminum chloride, polyaluminum chloride, ferrous chloride, ferric chloride, aluminum chlorohydrate, colloidal silica, ethylene-dichloride/ammonia polymers, melamine/formaldehyde polymers, and epichlorohydrin-dimethylamine condensation polymer in liquid form; polydiallyldimethyl ammonium chloride in liquid or solid form; and mixtures thereof.

The present invention can best be understood by reference to the following working and comparative examples.

**Example 1**

A 90:10 mole copolymer of diallyldimethylammoniumchloride (DADMAC) and vinyltrimethoxysilane (VTMS), at 20% actives, was prepared for use as a coagulant. The following reactants were used to form the hydrophobically modified polyelectrolyte copolymer coagulant:

| | |
|---|---|
| 312.91 grams | Diallydimethylammoniumchloride DADMAC (a 58% Solution) |
| 18.89 grams | Vinyltrimethoxysilane (a 98% Solution) |
| 200.0 grams | Deionized Water |
| 1.80 grams | [2,2'-Azobis (2-amidinopropane)] Dihydrochloride Initiator |
| 20.0 grams | Sodium Chloride |
| 446.20 | Final Dilution Water |
| 0.1 grams | Versene |

A semi-batch process was used to prepare the DADMAC/VTMS copolymer.

A 1.5L reactor equipped with a mechanical stirrer a thermocouple, nitrogen inlet/outlet tubes, condenser and two syringe pumps was set up. Vinyltrimethoxysilane was taken in the first pump set at a delivery rate of 4.5 cc/hr. The second pump contained an aqueous solution of 2,2' azobis (2-amidinopropane) dihydrochloride (1.2 g in 48.8 g DI water), and the pump was set at 12.5 cc/hr.

The DADMAC, sodium chloride, and Versene were charged into a polymerization reactor and heated to 52°C. The reaction mixture was purged with nitrogen. VTMS and initiator-containing pumps were started and the polymerization was allowed to proceed.

A thick polymer started forming after about 2 hours. At the end of two and a half hours, the viscosity increased to a point where continued agitation was difficult. 200 ml of deionized water was then added. The reaction continued for a period of 5 hours, and then subjected to a post treatment at 82° C for 5 hours.

Product phase separated in two days and indicated extensive crosslinking as shown below:

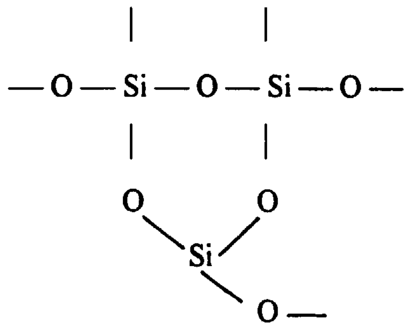

The phase-separated product swelled in water, yet was water-insoluble.

**Example 2**

A 99.5/0.5 mole ratio copolymer of diallyldimethylammoniumchloride (DADMAC) and vinyltrimethoxysilane (VTMS), at 20% actives, was prepared for use as a coagulant. The following reactants were used to form the hydrophobic polyelectrolyte copolymer coagulant:

| | |
|---|---|
| 321.13 grams | DADMAC (a 62% Solution) |
| 1.00 grams | VTMS (a 98% Solution) |
| 0.2 grams | Versene |
| 258.8 grams | Deionized Water |
| 1.20 grams | 2,2'-Azobis [2(2-imdazolin-2yl) propane Dihydrochloride Initiator |
| 61.00 grams | Sodium Chloride |
| 356.87 grams | Dilution Water |

A batch process was used to prepare the DADMAC/VTMS copolymer. A reactor similar to the one described in Example 1 was used.

The DADMAC, VTMS, Versene, sodium chloride and deionized water were charged into a polymerization reactor at a temperature of 58° C. Thereafter, the initiator (0.6 grams in 49.4 grams deionized water) was charged into the reactor dropwise via a syringe pump at 12.5 cc/hour.

A thick polymer started forming after about 1.0 hour. At the end of 1.5 hours, the mixture was difficult to stir. At this point, deionized water addition was started using a syringe pump set at 70 ml/hour. The reaction continued for a period of 5.5 hours. After that, initiator (0.6 grams in 19.4 grams of deionized water) was added. The reactor was heated to 82°C and held at that temperature for 3 hours. The reaction product was then diluted with 356.87 grams of water and stored. Reduced specific viscosity and intrinsic viscosity measurements were determined on a 1% polymer solution in $NaNO_3$ (sodium nitrate) and found to be 2.02/1.3 dl/gm respectively.

**Example 3**

A 99.0/1.0 mole ratio DADMAC/VTMS copolymer was prepared using the procedure of Example 2. 2.0 g of VTMS and 355.07 g of DI water were used in place of the amounts in Example 2. All other quantities were the same. RSV/IV for a 1% by weight solution of the polymer in sodium nitrate were 2.2/1.2 dl/g, respectively.

**Example 4**

A 99.0/1.0 mole ratio copolymer of diallyldimethylammoniumchloride (DADMAC) and vinyltrimethoxysilane (VTMS), at 20% actives, was prepared for use as a coagulant. The following reactants were used to form the silicon containing polyelectrolyte copolymer coagulant:

| | |
|---|---|
| DADMAC (monomer) 39.8 % solution | 497.20 g |
| VTMS (vinyltrimethoxysilane) | 2.00 g |
| Versene | 0.20 g |

(continued)

| | |
|---|---|
| Ammonium Persulfate (APS) | 3.90 g |
| Deionized Water | 20.00 g |
| Ammonium Persulfate (APS) | 1.90 g |
| Deionized Water | 20.0 g |
| Dilution Water | 195.00 g |
| Final Water | 262.90 g |
| Sodium bisulfite | 1.00 g |
| | 1,000.00 g |

1. Versene, and DADMAC monomer were taken in a conventional polymer reactor as described in Example 1.
2. The reactor was heated to 57°C. under constant $N_2$ purging, and stirred at 400 rpm.
3. VTMS was added immediately followed by the APS solution (2.0g in 20 g wa ter).
4. The reactor was held at 57°C. for 3 hours. During this period, dilution water (195 g) was added at a rate of 65g/hr.
5. The reactor was then heated to 82° C; and a solution of APS (0.97g) in water (10g) was added.
6. After holding at 82° C. for 2 hours, the reactor was cooled to room tempera ture. Sodium bisulfite was added to prevent degradation to the reactor and mi xed for 15 min.
7. The product was transferred into a storage container.

Reduced specific viscosity and intrinsic viscosity measurements were determined on a 1% polymer solution in $NaNO_3$ (sodium nitrate) and found to be 1.6 and 0.9 dl/gm respectively. This material is hereinafter referred to as Example 4.

**Example 5**

Experimentation was performed on samples of recycled furnish effluent from a North American paper mill. 200 ml mill samples were taken from the DAF unit for analysis by the jar test.

The 200 ml sample of effluent is added to a 1000 ml jar. Next, the mixture was stirred at 200 rpm and the coagulant polymer to be tested was added. After stirring for two and a half minutes, a high molecular weight flocculant is added to the jar, and stirring is continued for another 30 seconds. Subsequently, the stirring speed is reduced to 20 rpm and the mixture is stirred for 2 minutes. After this five minute sequence, stirring is ceased and the mixture is allowed to settle for 5 minutes. A 3 ml aliquot is removed from the supernatant in the jar and turbidity was measured on a Hach P 2100 turbidimeter. Results are reported in units of NTU. The smaller the number, the less turbid the system is, and thus the more effective the polymeric treatment for deinking is.

The above-mentioned method was utilized to obtain the results of Table I. No flocculant was utilized in conjunction with the coagulant. The data shows that the polymer of the instant invention was as effective as the conventional treatment, though a much smaller amount of the polymer of the instant invention was required to obtain the comparable result. Therefore, the poly(DADMAC/VTMS) is more efficient at clarification.

TABLE I

| Coagulant | Dosage (ppm) | Turbidity |
|---|---|---|
| | Actives Basis | (NTU) |
| | | |
| None | None | >1000 |
| Polymer A | 5 | 82 |
| Polymer A | 10 | 75 |
| Polymer A | 15 | 79 |
| Polymer A | 20 | 71 |
| | | |
| Example 4 | 1 | 201 |
| Example 4 | 2 | 97 |

TABLE I (continued)

| Coagulant | Dosage (ppm) | Turbidity |
|---|---|---|
| | Actives Basis | (NTU) |
| Example 4 | 3 | 79 |
| Example 4 | 4 | 65 |
| Polymer A = poly(epichlorohydrin/dimethylamine), linear | | |

**EXAMPLE 6**

The procedure described in Experiment 5 was utilized to obtain the results of Table II. No flocculant was utilized in conjunction with the coagulant. These results also illustrate the efficiency of the poly(DADMAC/VTMS) for purposes of deinking water clarification. If polymer A and Example 4 are compared, comparable reduction in turbidity which indicates a greater amount of clarification is only obtained when a larger amount of polymer A is utilized. Example 4 gives equivalent turbidity reduction at a much lower dosage. Polymer B is a solution poly(DADMAC) with an IV of 0.8 - 1.2 dL/g, so that for comparison purposes, polymer B and Example 4 have similar viscosities. If polymer B and Example 4 are compared at equivalent dosages, it is apparent that better results are obtained through the utilization of the polymers of the instant invention.

TABLE II

| Coagulant | Dosage (ppm) | Turbidity |
|---|---|---|
| | Actives Basis | (NTU) |
| | | |
| None | None | >1000 |
| Polymer A | 5 | 92 |
| Polymer A | 7.5 | 81 |
| Example 4 | 2 | 113 |
| Example 4 | 3 | 90 |
| Polymer B | 2 | 130 |
| Polymer B | 3 | 122 |
| Polymer A = poly(epichlorohydrin/dimethylamine), linear<br>Polymer B = poly(diallyldimethylammoniumchloride) | | |

**EXAMPLE 7**

The experimental procedure described in Example 5 was utilized to obtain the results of Table III. At comparable dosages, the poly(DADMAC/VTMS) provided greater turbidity reduction.
Without any treatment, the turbidity of the deinking process water was greater than 1000.

TABLE III

| Coagulant | Flocculant | Order of Addition | Dosage (ppm) | Turbidity |
|---|---|---|---|---|
| | | | Actives Basis | (NTU) |
| | | | Cat-Floc | |
| | | | | |
| Polymer A | Polymer C | Cat/Floc | 5/0.75 | 65 |
| Example 4 | Polymer C | Cat/Floc | 2/0.75 | 90 |

TABLE III (continued)

| Coagulant | Flocculant | Order of Addition | Dosage (ppm) Actives Basis Cat-Floc | Turbidity (NTU) |
|---|---|---|---|---|
| Polymer B | Polymer C | Cat/Floc | 2/0.75 | 111 |
| Polymer A | Polymer C | Cat/Floc | 7.5/0.75 | 49 |
| Example 4 | Polymer C | Cat/Floc | 3/0.75 | 64 |
| Polymer B | Polymer C | Cat/Floc | 3/0.75 | 95 |

Polymer A = poly(epichlorohydrin/dimethylamine), linear
Polymer B = poly(diallyldimethylammoniumchloride)
Polymer C = poly(acrylic acid/acrylamide), 30:70 mole ratio

**EXAMPLE 8**

The copolymers to be tested were dissolved in water. This aqueous solution was then stirred for 30 minutes. A 1% solution of a flocculant (AcAm/sodium acrylamide copolymer) was prepared.

In a 800 ml beaker, 500 ml of food processing waste water from a chicken processing plant was treated with the copolymer solution as prepared above and mixed for 60 seconds. The flocculant (an acrylamide/sodium acrylate copolymer) was then added and the mixing continued for another 60 seconds. Agitation was then stopped and the solution was allowed to stand for 60 seconds. The supernatent liquid was separated and its turbidity measured using a HACH® DR2000 turbidimeter.

The results are enumerated in Table IV. Dosages of the polymers are listed on an actives basis. The treatment of the instant invention works better than conventional treatments as represented by polymers A, E and F demonstrated as a reduction in turbidity by a decrease in NTU value.

TABLE IV

| **Polymer Treatment** | **Dosage (ppm)** | **Clarity (NTU)** |
|---|---|---|
| Blank | None | > 1000 |
| E/F | 80/10 | 135 |
| E/F | 60/10 | 1000 |
| E/F | 40/10 | > 1000 |
| B/C | 15/3 | 234 |
| A/B/C | 2/15/3 | 56 |
| D/B/C | 2/15/3 | 38 |
| A/B/C | 4/15/3 | 38 |
| D/B/C | 4/15/3 | 16 |
| A/B/C | 6/15/3 | 32 |
| D/B/C | 6/15/3 | 18 |
| A/B/C | 8/15/3 | 25 |
| A/B/C | 10/15/3 | 22 |

A: Commercial Poly(Diallyldimethyl Ammonium Chloride), IV = 0.8-1.2 dL/g
B: Poly(Acrylamide/Acrylic Acid/Dimethylaminoethyl Methyl Chloride Quaternary) (40/10/50 mole % )
C: Poly(Acrylamide/Sodium Acrylate) (70/30 mole %)
D: Poly(Diallyldimethyl Ammonium Chloride/Vinyltrimethoxysilane) (99/1 mole %), IV = 0.8 dL/g, Polymer synthesized according to procedure of Example 3
E: Poly(Acrylamide/Dimethylaminoethyl Methyl Chloride Quaternary) (60/40 mole %, DRY)
F: Poly(Acrylamide/Sodium Acrylate) (70/30 mole %, DRY)

**EXAMPLE 9**

The procedure described in Example 8 was utilized to obtain the results of Table V. The data demonstrates that polymers of the instant invention are effective for turbidity reduction in food processing waste water.

TABLE V

| Coagulant | Coagulant IV (dL/g) | Coagulant Dose (ppm) | Flocculant | Flocculant Dose (ppm) | Clarity (NTU) |
|---|---|---|---|---|---|
| | | | | | |
| Blank | none | none | none | none | > 1000 |
| p(DADMAC) | 0.8-1.2 | 15 | AcAm/NaAc[2] | 15 | 766 |
| DADMACBCQ[1] | 1.6 | 15 | AcAm/NaAc[2] | 15 | 406 |
| DADMAC/VTMS[3] | 1.23 | 15 | AcAm/NaAc[2] | 15 | 398 |
| | | | | | |
| | | | | | |
| p(DADMAC) | 0.8-1.2 | 20 | AcAm/NaAc[2] | 15 | 707 |
| DADMACBCQ[1] | 1.6 | 20 | AcAm/NaAc[2] | 15 | 244 |
| DADMAC/VTMS[3] | 1.23 | 20 | AcAm/NaAc[2] | 15 | 172 |
| | | | | | |
| | | | | | |
| p(DADMAC) | 0.8-1.2 | 15 | AcAm/NaAc[2] | 20 | 647 |
| DADMACBCQ[1] | 1.6 | 15 | AcAm/NaAc[2] | 20 | 349 |
| DADMAC/VTMS[3] | 1.23 | 15 | AcAm/NaAc[2] | 20 | 347 |
| | | | | | |
| | | | | | |
| p(DADMAC) | 0.8-1.2 | 10 | AcAm/NaAc[2] | 20 | 563 |
| DADMACBCQ[1] | 1.6 | 10 | AcAm/NaAc[2] | 20 | 372 |
| DADMAC/VTMS | 1.23 | 10 | AcAm/NaAc[2] | 20 | 380 |
| (99/1) | | | | | |
| | | | | | |
| Polymer E[4] | | 100 | AcAm/NaAc[2] | 20 | 437 |

1 = Poly(Diallyldimethyl Ammonium Chloride/Dimethylaminoethyl Benzyl Chloride Quat) 90/10 mole %

2 = AcAm/NaAc = Poly(Acrylamide/Sodium Acrylate) 70/30 mole %

3 = Poly(Diallyldimethyl Ammonium Chloride/Vinyltrimethoxysilane) (99/1 mole %), IV = 0.8 dL/g, Polymer synthesized according to procedure of Example 3

4 = Poly(Acrylamide/Dimethylaminoethyl Methyl Chloride Quaternary) (60/40 mole %), (DRY)

**EXAMPLE 10**

The procedure described in Example 8 was utilized to obtain the results of Table VI. The copolymers of the instant invention show enhanced activity over the conventional poly(DADMAC) treatments.

TABLE VI

| **Coagulant** | **Coagulant IV (dL/g)** | **Coagulant dose (ppm)** | **Flocculant** | **Flocculant Dose (ppm)** | **Clarity (NTU)** |
|---|---|---|---|---|---|
| | | | | | |
| Blank | none | none | none | none | >1000 |
| p(DADMAC)[1] | 0.8-1.2 | 36 | AcAm/NaAc[2] | 55 | 509 |
| p(DADMAC)[1] | 1.8 | 36 | AcAm/NaAc[2] | 55 | 964 |
| DADMAC/ VTMS[3] | 1.2 | 36 | AcAm/NaAc[2] | 55 | 445 |
| | | | | | |
| DADMAC/ VTMS[4] | 1.23 | 36 | AcAm/NaAc[2] | 55 | 310 |
| | | | | | |
| | | | | | |
| p(DADMAC)[1] | 0.8-1.2 | 40 | AcAm/NaAc[2] | 55 | 309 |
| p(DADMAC)[1] | 1.8 | 40 | AcAm/NaAc[2] | 55 | 788 |
| DADMAC/ VTMS[3] | 1.2 | 40 | AcAm/NaAc[2] | 55 | 216 |
| | | | | | |
| DADMAC/ VTMS[4] | 1.23 | 40 | AcAm/NaAc[2] | 55 | 123 |
| | | | | | |
| | | | | | |
| p(DADMAC)[1] | 0.8-1.2 | 48 | AcAm/NaAc[2] | 55 | 149 |
| p(DADMAC)[1] | 1.8 | 48 | AcAm/NaAc[2] | 55 | 492 |
| DADMAC/ VTMS[3] | 1.2 | 48 | AcAm/NaAc[2] | 55 | 74.7 |
| | | | | | |
| DADMAC/ VTMS[4] | 1.23 | 48 | AcAm/NaAc[2] | 55 | 56.8 |
| | | | | | |
| | | | | | |
| p(DADMAC)[1] | 0.8-1.2 | 40 | AcAm/NaAc[2] | 50 | 136 |
| DADMAC/ VTMS[3] | 1.2 | 40 | AcAm/NaAc[2] | 50 | 58.4 |
| | | | | | |
| DADMAC/ VTMS[4] | 1.23 | 40 | AcAm/NaAc[2] | 50 | 41.8 |

[1] = Commercial Poly(Diallyldimethyl Ammonium Chloride), IV = 0.8-1.2 dL/g

[2] = AcAm/NaAc = Poly(Acrylamide/Sodium Acrylate ) 70/30 mole %

[3] = Poly(Diallyldimethyl Ammonium Chloride/Vinyltrimethoxysilane) (99.5/0.5 mole %). Polymer synthesized according to the procedure of Example 2.

[4] = Poly(Diallyldimethyl Ammonium Chloride/Vinyltrimethoxysilane) (99/1 mole %), IV = 0.8 dL/g, Polymer synthesized according to procedure of Example 3

TABLE VI (continued)

| Coagulant | Coagulant IV (dL/g) | Coagulant dose (ppm) | Flocculant | Flocculant Dose (ppm) | Clarity (NTU) |
|---|---|---|---|---|---|
| | | | | | |
| | | | | | |
| p(DADMAC)[1] | 0.8-1.2 | 40 | AcAm/NaAc[2] | 45 | 107 |
| DADMAC/ VTMS[3] | 1.2 | 40 | AcAm/NaAc[2] | 45 | 47.2 |
| | | | | | |
| DADMAC/ VTMS[4] | 1.23 | 40 | AcAm/NaAc[2] | 45 | 38 |
| | | | | | |
| | | | | | |
| p(DADMAC)[1] | 0.8-1.2 | 40 | AcAm/NaAc[2] | 40 | 148 |
| DADMAC/ VTMS[3] | 1.2 | 40 | AcAm/NaAc[2] | 40 | 78.1 |
| | | | | | |
| DADMAC/ VTMS[4] | 1.23 | 40 | AcAm/NaAc[2] | 40 | 58.6 |
| | | | | | |
| | | | | | |
| Polymer E[5] | | 200 | AcAm/NaAc[2] | 40 | 437 |

[1] = Commercial Poly(Diallyldimethyl Ammonium Chloride), IV = 0.8-1.2 dL/g
[2] = AcAm/NaAc = Poly(Acrylamide/Sodium Acrylate ) 70/30 mole %
[3] = Poly(Diallyldimethyl Ammonium Chloride/Vinyltrimethoxysilane) (99.5/0.5 mole %). Polymer synthesized according to the procedure of Example 2.
[4] = Poly(Diallyldimethyl Ammonium Chloride/Vinyltrimethoxysilane) (99/1 mole %), IV = 0.8 dL/g, Polymer synthesized according to procedure of Example 3
[5] = Poly(Acrylamide/Dimethylaminoethyl Methyl Chloride Quaternary) (60/40 mole %, DRY)

**EXAMPLE 11**

The jar test was used to evaluate the copolymer of diallyldimethylammonium chloride and vinyltrimethoxysilane synthesized by the method of Example 2 as a demulsifier in an oily waste water (API influent) from a refinery in the Midwest. The demulsifier was added to 100 ml of the waste water at the desired concentration and mixed using a Phipps and Bird gang stirrer for 2 minutes at 330 rpm and then mixed for 3 minutes at 30 rpm. The solution was then allowed to stand for 2 minutes. A subnatant aliquot was then drawn and the turbidity of the water was measured using a Hach ratio/xR turbidimeter. The results of the test are tabulated below in Table VII. For comparison purposes, the turbidity of the untreated oily waste water was measured at 400 NTU.

TABLE VII

| Turbidity of NTU of Waste water from a Midwestern Refinery | | |
|---|---|---|
| | NTU | |
| Dosage of Polymer (ppm) | poly(DADMAC) | poly(DADMAC/VTMS[1]) |
| 0.625 | - | 73 |
| 1.25 | 116 | 38 |
| 2.5 | 85 | 23 |

1 = 99.5/0.5 mole percent poly(DADMAC/VTMS)

TABLE VII (continued)

| Turbidity of NTU of Waste water from a Midwestern Refinery | | |
|---|---|---|
| | NTU | |
| Dosage of Polymer (ppm) | poly(DADMAC) | poly(DADMAC/VTMS[1]) |
| 3.75 | 75 | 16 |
| 5 | 62 | 17 |
| 6.25 | 107 | 18 |
| 7.5 | 153 | 35 |
| 10 | - | 118 |
| 12.5 | - | 184 |

1 = 99.5/0.5 mole percent poly(DADMAC/VTMS)

At a dose of 3.75 ppm the demulsifier lowers the water turbidity from 400 NTU to 16 NTU. Also, the new copolymer is more efficient and effective than commercially available poly (DADMAC ) at reducing turbidity at every dosage level tested. This is illustrated by the decrease in turbidity as demonstrated by lower NTU readings for poly (DADMAC/VTMS) than for poly(DADMAC). Above a dosage of 7.5 ppm, the polymer begins to overtreat the system, as evidenced by an increase in NTU. This phenomena actually causes a decrease in the clarity of the waste water, a common occurrence for demulsifiers.

**EXAMPLE 12**

The jar test was used to evaluate the copolymer of diallyldimethylammonium chloride and vinyltrimethoxy silane synthesized by the method of Example 2 as a demulsifier in an oily waste water (dissolved air flotation influent) from a Southern refinery by the procedure described in Example 11. The results of the test are tabulated below in Table VIII. For comparison purposes, the turbidity of the untreated oily waste water was measured at 152 NTU.

TABLE VIII

| Turbidity in NTU of Waste water from a Southern Refinery | | | | | |
|---|---|---|---|---|---|
| poly(DADMAC) Dose, ppm | NTU | Inorganic[2] Dose, ppm | NTU | poly(DADMAC/ VTMS)[1] Dose, ppm | NTU |
| 5.63 | 27.5 | 18.75 | 66.5 | 7.5 | 9.9 |
| 7.5 | 29.5 | 22.5 | 43.8 | 10 | 7.3 |
| 9.38 | 18.3 | 26.25 | 38.5 | 12.5 | 6.8 |
| 11.25 | 25.5 | 30 | 33.8 | 15 | 4.1 |
| 13.13 | 19.8 | 33.75 | 40.9 | 17.5 | 4.3 |
| 15 | 13.4 | 37.5 | 31.9 | 20 | 4 |

1 = 99.5/0.5 mole percent poly (DADMAC/VTMS)
2 = poly(aluminum chloride)

The poly(DADMAC) and inorganic demulsifier were evaluated in their normal dosage ranges for this type of application. A much smaller amount of poly(DADMAC/VTMS) is required to achieve a less turbid waste water stream than in either of the two existing treatments. Therefore, the new copolymer shows superior performance to poly(DADMAC) and a commonly used inorganic demulsifier.

**EXAMPLE 13**

A jar test was used to evaluate the copolymer of diallyldimethylammonium chloride and vinyltrimethoxy silane synthesized by the method of Example 2 as a demulsifier in an oily waste water from a Southern chemical processing plant, by the procedure described in Example 11. The results of the test are tabulated below in Table IX. For comparison

purposes, the turbidity of the untreated oily waste water was measured at 365 NTU.

TABLE IX

| Turbidity in NTU of Waste water from a Southern Chemical Processing Plant | | |
|---|---|---|
| | NTU | |
| Dosage of Polymer (ppm) | poly(DADMAC) | poly(DADMAC/VTMS)[1] |
| 1.25 | 324 | 177 |
| 2.5 | 231 | 81 |
| 3.75 | 195 | 77 |
| 5 | 241 | 66 |
| 6.25 | 264 | 100 |
| 7.5 | 280 | 130 |

1 = 99.5/0.5 mole percent poly(DADMAC/VTMS)

Table IX illustrates that at low dosages, poly(DADMAC/VTMS) is more efficient than poly(DADMAC) at demulsification. At 6.25 ppm, the polymer begins to overtreat the system. As previously noted, all demulsifiers cause a decrease in the clarity of the waste water above a certain dosage level.

**EXAMPLE 14**

A bottle test was used to evaluate the copolymer of diallyldimethylammonium chloride and vinyltrimethoxy silane synthesized by the method of Example 2 as a demulsifier in an oily waste water (from desalter unit) from a West Coast Refinery. The waste water was initially heated at 160°F for 15 minutes in a water bath. The demulsifier was then added to 100 ml of the waste water at the desired concentration, thoroughly shaken and heated at 160°F in the water bath for 20 minutes. The subnatant was then drawn and the turbidity of the water was measured using a Hach turbidimeter. The results of the test are tabulated below in Table X. For comparison purposes, the turbidity of the untreated oily waste water was measured at more than 2000 NTU.

TABLE X

| Turbidity in NTU of Waste water from a West Coast Refinery | | |
|---|---|---|
| | NTU | |
| Dosage of Polymer (ppm) | poly(DADMAC) | poly(DADMAC/VTMS[1]) |
| 10 | 163 | 124 |
| 12.5 | 133 | 107 |
| 20 | 101 | 89 |
| 25 | 152 | 110 |

1 = 99.5/0.5 mole percent poly(DADMAC/VTMS)

The new copolymer reduced the turbidity of the waste water from more than 2000 NTU to 90 NTU at a dose of 20 ppm. Also, the performance of the copolymer was slightly better than poly(DADMAC). As in the previous examples, at a certain point (here 25 ppm) polymer is overtreated, causing a decrease in the clarity of the waste water.

**EXAMPLE 15**

The jar test procedure of Example 11 was used to evaluate the copolymer of dimethyl amino ethyl acrylate methyl chloride quaternary salt (DMAEA.MCQ) and vinyl trimethoxysilane synthesized by the procedure of Example 4. The results of the test are enumerated in Table XI. Poly(DMAEA.MCQ/VTMS) appears to demulsify as well as poly (DADMAC/VTMS) and better than the conventional poly(DADMAC) treatment.

TABLE XI

| Turbidity in NTU of Wastewater from a Southern Refinery[1] | | | |
|---|---|---|---|
| | NTU | | |
| Polymer Dosage (ppm) | poly(DADMAC) | poly(DMAEA.MCQ/VTMS)[2] | poly(DADMAC/VTMS)[3] |
| 0.38 | 45 | | |
| 0.5 | | 38 | 36 |
| 0.56 | 38 | | |
| 0.75 | 40 | 31 | 28 |
| 0.94 | 30 | | |
| 1.0 | | 25 | 20 |
| 1.13 | 33 | | |
| 1.25 | | 20 | 19 |
| 1.5 | | 16 | 16 |

1 = API Influent treated
2 = 99.5/0.5 mole percent poly(DMAEA.MCQ/VTMS)
3 = 99.5/0.5 mole percent poly(DADMAC/VTMS)

## EXAMPLE 16

The polymer at the desired concentration was added to the wastewater and mixed at 330 rpm for 1 minute followed by mixing at 80 rpm for 5 minutes. The particles are then allowed to settle for 10 minutes. The supernatant is then collected for analysis of apparent color (AC) and true color (TC). The apparent color is determined by measuring the absorbance of the supernatant at 465 nm using a Hach DR-2000 unit. The true color is determined by adjusting the pH of the supernatant to 7.6, filtering it through a 0.8 micron filter and then measuring the absorbance at 465 nm. The unit of measurement for both parameters is Pt-Co. Both the measurements are used at industrial facilities to evaluate the performance of the polymers. The data in Table XII was obtained by experimentation on wastewater from on a Southeastern paper mill.

The conventional treatment using a solution poly(DADMAC) was compared to the copolymer of the instant invention. Both poly(DADMAC) and poly(DADMAC/VTMS) tested had similar molecular weights. Lower numbers indicate presence of less color contaminants. In each case, after a certain point the polymers were overdosed, such that color counts actually increased. For both apparent and true color, poly(DADMAC/VTMS) provided greater color removal at lower dosage levels.

Table XII

| | Color Removal | | | |
|---|---|---|---|---|
| | poly(DADMAC) | | poly(DADMAC/VTMS)[1] | |
| Dosage (ppm) | Apparent Color | True Color | Apparent Color | True Color |
| | | | | |
| 50 | | | 1509 | |
| 60 | | | 1237 | 192 |
| 70 | | | 616 | 165 |
| 75 | 1992 | | | |
| 80 | | | 585 | 156 |
| 90 | 1150 | 190 | 575 | 152 |
| 100 | | | 576 | 149 |

1 = The polymer was prepared according to the procedure described in Example 3.

Table XII (continued)

| | Color Removal | | | |
|---|---|---|---|---|
| | poly(DADMAC) | | poly(DADMAC/VTMS)[1] | |
| Dosage (ppm) | Apparent Color | True Color | Apparent Color | True Color |
| 105 | 841 | 156 | | |
| 110 | | | 609 | 140 |
| 113 | 817 | 146 | | |
| 120 | 640 | 161 | 694 | 132 |
| 135 | 701 | 135 | | |
| 140 | | | 871 | |
| 143 | 848 | 130 | | |
| 150 | 1006 | 120 | | |
| 160 | | | 1152 | |

1 = The polymer was prepared according to the procedure described in Example 3.

## EXAMPLE 17

The polymer was added to the wastewater at the desired concentration and mixed at 330 rpm for 1 minute, followed by mixing at 50 rpm for 2.5 minutes and 2.5 minutes of settling. The supernatant was then analyzed for turbidity expressed as NTU using a Hach turbidimeter.

The data in Table XIII was obtained by experimentation on wastewater from an industrial facility in the Northwest.

A comparison of the conventional solution poly(DADMAC) treatment to the copolymers of the instant invention was performed. Poly(DADMAC/VTMS) was much more efficient at turbidity removal, as evidenced by lower NTU readings at comparable dosages.

Table XIII

| | Turbidity (NTU) | |
|---|---|---|
| Dosage (ppm) | poly(DADMAC) | poly(DADMAC/VTMS)[1)] |
| | | |
| 2 | | 101 |
| 2.5 | 117 | |
| 3 | | 64.5 |
| 3.75 | 84 | |
| 4 | | 33.4 |
| 4.5 | 49 | |
| 5 | | 37.2 |
| 5.25 | 48 | |
| 6 | 54 | 19.4 |
| 6.75 | 33 | |
| 7 | | 21.4 |
| 8.25 | 36 | |
| 9 | | 19.9 |

1 = The polymer was prepared according to the procedure described in Example 4.

Table XIII (continued)

| | Turbidity (NTU) | |
|---|---|---|
| Dosage (ppm) | poly(DADMAC) | poly(DADMAC/VTMS)[1)] |
| 9.75 | 33.2 | |
| 11 | | 19.4 |

1 = The polymer was prepared according to the procedure described in Example 4.

## EXAMPLE 18

A pulp slurry was prepared using a dry lap hardwood kraft paper. Pieces of the paper were soaked in water for 30 minutes, followed by treatment in a hydrapulper for 35 minutes. The entire batch was then added to a Valley beater with enough water to form a 2.5% pulp solution by weight. The pulp was treated in the beater for 35 minutes.

The composition of the synthetic pitch used for this example was as follows:

| Chemical | % Composition |
|---|---|
| Abietic Acid | 50 |
| Oleic Acid | 10 |
| Palmitic Acid | 10 |
| Oleic Acid, triglyceride ester(corn oil) | 10 |
| Methyl Stearate | 5 |
| β-Sitosterol | 5 |
| Cholesterol Caproate | 5 |
| Oleyl Alcohol | 5 |

The Wilhelmy plate technique, using the KRUSS K10T tensiometer, was used to make surface and interfacial tension measurements. The instrument measures the force required to pull a platinum plate from an air/liquid or a liquid/liquid interface. The technique also allows for the measurement of the change in surface tension as a function of time. The plate was cleaned using acetone, methyl alcohol, and deionized water prior to heating using a propane torch. The glass cells used for surface tension measurements were first cleaned with a dilute soap solution, acetone and methyl alcohol, and then immersed in aqua-regia overnight. The cell was then thoroughly rinsed in deionized water. A water jacket, in which the cell is placed, facilitates the maintenance of a constant temperature. Change in interfacial/surface tension was monitored continuously as a function of time.

One gram of synthetic pitch was taken in a 250 ml beaker and heated until the melting point of the pitch was reached. 49 grams of a 0.5% NaOH solution was poured into the beaker and the system was stirred. Known amounts of this solution were added to 100 ml of water, and the pH was adjusted to 6.5 using a dilute HCI solution. The water containing the pitch was stirred for 2 minutes using a 25 mm stir bar. 25 ml of this system was then placed in the test cell for surface tension measurements. 1% polymer solution was prepared in water. A Hamilton microsyringe was used to add polymer to the system. In cases where the polymer was added to the solution containing pitch, the system was stirred for 2 minutes using a 15 mm stir bar.

Surface tension measurements are commonly used to monitor the process of adsorption of a surfactant or polymer to an interface. As the surfactant orients itself at the interface it will lower the surface tension of the system. The Wilhelmy plate that is positioned at the interface senses this change in tension (or pressure) hence allowing for continuous monitoring of the adsorption process. The surface tension measurements were made to determine the interaction between the polymer and the individual pitch particles. The surface tension of water which is typically 72 mN/m did not change on addition of poly(DADMAC). This proved that the polymer was not active at the air/water interface.

Figs. 2, 3 and 4 show the change in the surface tension when synthetic pitch is added to water both with and without poly(DADMAC). Since pitch can be considered to be a dilute oil-in-water emulsion stabilized by surfactants, the reduction in surface emulsion stabilized by surfactants, and the reduction in surface tension of the system may be attributed to the adsorption of free surfactant at the air/water (a/w) interface. The value of the surface tension will depend on the amount of pitch, and hence the amount of surfactant in the system. On addition of polymer to the system, the surface tension is lowered further (see Figs. 2, 3, and 4) in comparison to the base line curve for pitch alone. The reduction in surface tension implies that more surfactant is available to be absorbed at the a/w interface. For a given concentration of pitch it can be assumed that the amount of surfactant will be fixed. Hence the surfactant should have

been released from the surface of the oil droplets that it is stabilizing. This can happen only if the surface area available for surfactant adsorption is reduced, releasing more free surfactant to get to the a/w interface and if the surfactant is replaced by the polymer on the surface of the pitch particle. A similar trend is seen at various concentrations of pitch and polymer. Hence it may be concluded that the polymer is bringing about the coalescence of the oil droplets in the dilute oil-in-water emulsion.

Interfacial tension measurements were made to determine whether the polymer was active at the oil/water interface. For lack of a better substitute corn oil was used to represent the oil phase of the oil-in-water emulsion containing pitch. The equilibrium interfacial tension between corn oil and deionized water was found to be 25.2 mN/m at 23°C. On addition of 5 ppm of the poly(DADMAC) to water the interfacial tension was reduced to 21 mN/m, and to 20 mN/m at 50 ppm polymer, thus proving that the polymer is active at the oil/water interface.

Based on surface tension measurements and photomicrographic studies conducted by the present inventors, it was concluded that the poly(DADMAC) brought about the coalescence of pitch particles to a size such that the particles can be caught in the matrix of the pulp fibers and be carried along with the paper much like the process of filtration.

Contact angle measurements were made to determine whether the poly(DADMAC) had a tendency to adsorb on the surface under consideration. The process of drying during these measurements was essential to make any kind of reasonably reproducible measurements.

A KRUSS G-123 Contact Angle Meter was used to measure the change in the contact angle made by water containing pitch on surfaces like Teflon®, stainless steel 316 and stainless steel 304, as a function of time (see Fig. 1). The surface used for the study was first cleaned using acetone and methyl alcohol, and flushed with deionized water. The test surface was then immersed in a beaker containing water with a known amount of polymer for 5 minutes. The contents of the beaker were stirred continuously. The test surface was then dried, and the change in the contact angle of a drop of water containing pitch particles was measured. A drop of uniform size was obtained by using a micrometer driven precision syringe.

Table XIV below shows the change in the three phase contact angle of a drop of water containing pitch particles on a Teflon® surface.

TABLE XIV

| Time (minutes) | Contact Angle "θ" | Test Condition |
|---|---|---|
| 0 | 80 | Treated |
| 10 | 46 | Treated |
| | | |
| 0 | 110 | Untreated |
| 10 | 85 | Untreated |

The untreated surface is hydrophobic as seen from the contact angle which is as high as 110°. This angle changes to approximately 85° in 10 minutes. On the other hand, the contact angle of the same drop on a surface treated with polymer changes from 80° to 46° in 10 minutes. This change implies that the surface is being rendered hydrophilic by the adsorption of polymer onto the Teflon® surface in the five minutes that the surface is in contact with the polymer. This explains the variability in the contact angle measurements on the Teflon® surface at various locations.

The poly(DADMAC) was found to be active at the pitch particle/water interface. Poly(DADMAC) is not active at the air/water interface. Contact angle measurements indicated that the polymers also have a tendency to adsorb on the solid surfaces rendering them hydrophilic. The hydrophilic nature of the surface inhibits the deposition of pitch particles on them.

## EXAMPLE 19

A series of stainless steel 316 coupons were immersed in varying dosages of a polymer solution of poly (DADMAC). A second series of coupons were then immersed in varying dosages of a polymer solution of DADMAC/VTMS having a molar ratio of 99.5:0.5. Each coupon was left in its respective solution for approximately 18 hours. The comparative efficiencies of the two polymers in inhibiting pitch deposition are set forth below in Table XV and Fig. 5, attached hereto.

TABLE XV

| Polymer Composition | W Initial (grams) | W Final (grams) | pH Adj. | pH Final | Conc. (ml) | Pitch Dosage (lb/ton) | ΔW (grams) |
|---|---|---|---|---|---|---|---|
| Blank | 11.9115 | 12.0486 | 6.55 | 5.73 | 150 | 0 | 0.1371 |
| DADMAC | 11.0420 | 11.2052 | 6.83 | 5.70 | 150 | 2 pdct. | 0.1632 |
| DADMAC | 11.3185 | 11.7387 | 7.3 | 6.91 | 150 | 3 | 0.4202 |
| DADMAC | 11.2950 | 11.4769 | 7.42 | 6.23 | 150 | 4 | 0.1819 |
| DADMAC | 10.7239 | 10.7352 | 7.27 | 5.87 | 150 | 5 | 0.0113 |
| DADMAC | 11.2986 | 11.3136 | 7.2 | 5.92 | 150 | 10 | 0.0150 |
| DADMAC/ VTMS | 11.2916 | 11.4597 | 7.16 | 5.83 | 150 | 1 | 0.1681 |
| DADMAC/ VTMS | 10.7198 | 10.7109 | 6.36 | 5.52 | 150 | 2 | ~0.00 |
| DADMAC/ VTMS | 10.6431 | 10.6368 | 6.03 | 5.55 | 150 | 3 | ~0.00 |
| DADMAC/ VTMS | 10.7013 | 10.7169 | 7.05 | 6.32 | 150 | 4 | 0.0156 |
| Notes: W denotes weight of the coupon. | | | | | | | |

The polyDADMAC/VTMS copolymer exhibited far greater ability to adsorb onto the hydrophobic surfaces than the DADMAC polymer. The polyDADMAC/VTMS copolymer was also capable of causing an increase in particle size to a level such that it can be caught within the fibers.

**EXAMPLE 20**

Surface tension is commonly used as a simple tool to determine whether a molecule dissolved in water or any other solvent is active at the air water (a/w) interface. The surface tension of deionized, distilled water is typically 72 mN/m at 23°C. A molecule is considered to be surface active at the a/w interface if it is able to diffuse to the a/w interface and lower the surface tension of water from 72 mN/m. The greater the reduction of the surface tension for a given change in surfactant concentration, the greater is the surface activity of the molecule.

When surfactants are added to water they will typically lower the surface tension of the water (see Surfactant Science and Technology, D. Meyers, 1988. p. 194). As the concentration of the surfactant dissolved in water is increased, the surface tension is lowered until a point where any further increase in surfactant concentration has no effect on the surface tension of the system. The concentration at which this phenomena occurs is called the critical micelle concentration or CMC. At CMC the surfactants are known to form aggregates called micelles. These micelles are formed due to the association of individual surfactant molecules to form spherical, ellipsoidal or cylindrical aggregates. The micelles are in a state of dynamic equilibrium. It is the ability of the surfactants to form micelles that are primarily responsible for various desirable properties of surfactants like emulsification, demulsification, adsorption, foaming, solubilization and detergency.

PolyDADMAC when dissolved in water does not lower its surface tension. Hence one can conclude that it is not active at the a/w interface. The polyDADMAC/VTMS molecules, however, lower the surface tension of water at concentrations as low as 100 ppm (see Fig. 6). The higher the concentration of the polymer in the water, the lower the surface tension. Unlike surfactants these polymers do not show any evidence of the formation of micelles. The surface tension versus concentration curves do not show a sharp inflexion point as shown by surfactants.

The surface active nature of the modified polyDADMAC molecule facilitates its ability to adsorb on surfaces and interfaces making it more effective (i.e., efficient) in various applications like pitch removal, water clarification, color removal etc.

Alternatively, the silicon moiety can be incorporated onto the polyelectrolyte by reacting, for example, an amine and a halo silane.

## Claims

1. A surface active, silicon-containing polyelectrolyte copolymer comprising:

   A) recurring units of at least one vinyl alkoxysilane monomer as a first monomer preferably being mono- or disubstituted and having 1 to 3 $C_1$-$C_4$-alkoxy groups in an amount of from 0.01 to 20 mole percent; and

   B) recurring units of at least one second monomer selected from the group consisting of (meth)acrylamide, (meth)acrylic acid and its alkali metal salts, dimethylaminoethyl or propyl(meth)acrylate quaternary salt, diallyldimethyl ammonium halide, maleimide, vinyl formamide, vinyl acetate, itaconic acid, maleic anhydride, fumaric acid, aconic acid, (meth)acrylamido methylpropane sulfonic acid and its alkali metal salts, $C_6$ - $C_{20}$-alkyl esters of (meth)acrylic acid, phenethyl ester of (meth)acrylic acid, nonyl-α-benzyl ester of (meth)acrylic acid, dimethyl (meth)acrylamide, diethyl (meth)acrylamide, t-butyl (meth)acrylamide, dimethylaminoethyl (meth) acrylate quaternary salt, 3-methyl(meth)acrylamide propyltrimethyl ammonium halide, (meth)acrylamidomethyl butanoic acid and combinations thereof in an amount of from 99.99 to 80 mole percent,

   the polyelectrolyte copolymer having a reduced specific viscosity in one molar sodium nitrate solution containing 1 % polymer actives of from 0.1 to 8 dl/g.

2. The copolymer of claim 1 wherein the vinyl alkoxysilane monomer is selected from the group consisting of vinyltrimethoxysilane and vinyl triethoxysi lane.

3. The copolymer of claim 1 or 2, wherein the quaternary salt of component (B) is a $C_1$ to $C_{20}$ moiety selected from the group consisting of alkyl, aryl and alkylaryl.

4. The copolymer of claim 3 wherein the quaternary salt is a methyl halide quaternary salt, preferably a methylchloride quaternary salt, or a benzyl halide quaternary salt, preferably a benzyl chloride quaternary salt.

5. The copolymer of any of claims 1 to 4 wherein the ammonium halide salt of component (B) is an ammonium chloride, ammonium bromide or ammonium iodide salt, preferably an ammonium chloride salt.

6. The copolymer of any of claims 1 to 5, wherein the mole ratio of component (A) to component (B) ranges from (0.1 to 15):(99.9 to 85), preferably from (0.1 to 5.0):(99.9 to 95), more preferably from (0.5 to 4):(99.5 to 96), most preferably from (0.5 to 2):(99.5 to 98).

7. The copolymer of any of claims 1 to 6 having a reduced specific viscosity in one molar sodium nitrate solution containing 1 % polymer actives of from 0.5 to 5 dl/g, preferably from 0.7 to 3.0 dl/g.

8. The copolymer of any of claims 1 to 7 comprising as component (B) recurring units of a diallyldimethyl ammonium halide, preferably of diallyldimethyl ammonium chloride, and as component (A) recurring units of vinyl alkoxysilane, preferably of vinyl trimethoxysilane or vinyl triethoxysilane.

9. The copolymer of any of claims 1 to 8, which is made by free radical polymerization.

10. The copolymer of any of claims 1 to 9 wherein said second monomer is selected from the group consisting of hydrophilic monomers and hydrophobic monomers.

11. The copolymer of claim 10 wherein said hydrophilic monomer is selected from the group consisting of: acrylamide, acrylic acid and its alkali metal salts, quaternary acrylates, diallyldimethyl ammonium chloride, maleimide, vinyl formamide, itaconic acid, maleic anhydride, fumaric acid, aconic acid, acrylamido methylpropane sulfonic acid and its alkali metal salts.

12. The copolymer of claim 10 wherein said hydrophobic monomer is either a hydrophobic water-insoluble monomer or a hydrophobic water-soluble monomer.

13. The copolymer of claim 12 wherein said hydrophobic water-insoluble monomer is selected from the group consisting of: higher alkyl esters of acrylic acid and alkylaryl esters of acrylic acid.

**14.** The copolymer of claim 12 wherein said hydrophobic water-soluble monomer is selected from the group consisting of: acrylic esters, alkyl acrylamides, dimethylaminoethyl acrylate benzyl chloride quaternary, 3-methylacrylamide propyltrimethyl ammonium chloride, and acrylamidomethyl butanoic acid.

**15.** Use of the polyelectrolyte copolymer of any of claims 1 to 14 in a method for clarifying ink-containing effluent water from recycled paper production which method comprises adding, as a coagulant, to the ink-containing effluent water from recycled paper production an effective deinking amount of the polyelectrolyte copolymer.

**16.** The use of claim 15 wherein the polyelectrolyte copolymer comprises 0.01 to 10 mole% of units of a vinyl alkoxysilane monomer selected from the group consisting of vinyltrimethoxysilane and vinyl triethoxysilane and 99.99 to 90 mole% of units of diallyldimethyl ammonium chloride.

**17.** The use of claim 15 or 16 wherein the polyelectrolyte copolymer is added to said ink-containing effluent water in an amount of from 0.25 to 100 ppm, preferably from 0.5 to 75 ppm, most preferably from 1 to 50 ppm.

**18.** The use of any of claims 15 to 17 wherein the reduced specific viscosity of the polyelectrolyte copolymer in one molar sodium nitrate solution for 1 % polymer actives is from 0.1 to 4 dl/g, preferably from 0.5 to 3 dl/g, most preferably from 0.8 to 2.5 dl/g.

**19.** The use of any of claims 15 to 18 wherein the polyelectrolyte copolymer comprises units of diallyldimethyl ammonium chloride and units of vinyltrimethoxysilane in a mole ratio of from 99.99: 0.01 to 95.0:5.0.

**20.** The use of any of claims 15 to 19 further comprising the addition of a flocculant to said effluent water.

**21.** The use of claim 20 wherein said flocculant is a copolymer of acrylamide and acrylic acid.

**22.** Use of the polyelectrolyte copolymer of any of claims 1 to 14 in a method of removing waste oil from industrial oily waste water which includes oil, dispersed solids and emulsified water, the method comprising the steps of:

a) treating the oily waste water with an effective amount of the polyelectrolyte copolymer as a demulsifier;
b) allowing the oil, emulsified water and dispersed solids to flocculate and separate into layers; and then
c) removing the water layer from the treated waste water.

**23.** The use of claim 22 wherein the polyelectrolyte copolymer comprises units of diallyldimethyl ammonium chloride and units of vinyl trimethoxysilane.

**24.** The use of claim 22 or 23 wherein the polyelectrolyte copolymer demulsifier has a reduced specific viscosity in one molar sodium nitrate solution for 1 % polymer actives of from 0.2 to 5.0 dl/gm, preferably from 0.5 to 4.0 dl/gm, most preferably from 0.7 to 3.0 dl/gm.

**25.** The use of any of claims 22 to 24 wherein the polyelectrolyte copolymer comprises units of diallyldimethyl ammonium chloride and units of vinyl trimethoxysilane in a mole ratio of from 99.9:0.01 to 80:20, preferably from 99.9:0.1 to 85:15, most preferably from 99.9:0.1 to 95.0:5.0.

**26.** The use of any of claims 22 to 25 wherein the effective amount of the polyelectrolyte copolymer demulsifier added to the oily waste water is at least 0.005 % by weight, preferably at least 0.05 % by weight, most preferably at least 0.1 % by weight of said fluid.

**27.** Use of the polyelectrolyte copolymer of any of claims 1 to 14 in a method for conditioning food processing waste water prior to chemical dewatering,the method comprising the step of treating the food processing waste water with an effective amount of the polyelectrolyte copolymer as a coagulant.

**28.** The use of claim 27 wherein the polyelectrolyte copolymer comprises units of diallyldimethyl ammonium chloride and units of vinyl trimethoxysilane.

**29.** The use of claim 27 or 28 wherein the polyelectrolyte copolymer coagulant has a reduced specific viscosity in one molar sodium nitrate solution for 1 % polymer actives of from 0.2 to 8 dl/g, preferably from 0.5 to 5.0 dl/g, most preferably from 0.7 to 3.0 dl/g.

**30.** The use of any of claims 27 to 29 wherein the polyelectrolyte copolymer comprises units of diallyldimethyl ammonium chloride and units of vinyltrimethoxysilane in a mole ratio of from 99.99:0.01 to 80:20, preferably from 99.9:0.1 to 85:15.

**31.** The use of any of claims 27 to 30 wherein the method includes the further step of adding a flocculant to the treated food processing waste water.

**32.** The use of any of claims 27 to 31 wherein the food processing waste water is treated with from 1 to 500 ppm, preferably from 10 to 300 ppm, most preferably from 20 to 100 ppm of the polyelectrolyte copolymer coagulant.

**33.** Use of the polyelectrolyte copolymer of any of claims 1 to 14 in a process for removing color from a paper mill waste effluent containing color bodies which process comprises:

a) treating the waste effluent containing color bodies with an effective color-removing amount of the polyelectrolyte copolymer as a coagulant;
b) coagulating the color bodies present in the waste effluent; and then
c) removing the coagulated color bodies from the waste effluent.

**34.** The use of claim 33 wherein the polyelectrolyte copolymer comprises units of diallyldimethyl ammonium chloride and units of vinyl trimethoxysilane.

**35.** The use of claim 33 or 34 wherein the polyelectrolyte copolymer coagulant has a reduced specific viscosity in one molar sodium nitrate solution for 1 % polymer actives of from 0.2 to 5 dl/g, preferably from 0.5 to 4.0 dl/g, most preferably from 0.7 to 3.0 dl/g.

**36.** The use of any of claims 33 to 35 wherein the polyelectrolyte copolymer comprises units of diallyldimethyl ammonium chloride and units of vinyl trimethoxysilane in a mole ratio of from 99.99:0.01 to 80:20, preferably from 99.9:0.1 to 85:15, most preferably from 99.9:0.1 to 95.0:5.0.

**37.** The use of any of claims 33 to 36 wherein the papermill waste effluent is treated with from 1 to 500 ppm, preferably from 30 to 200 ppm, most preferably from 50 to 120 ppm of the polyelectrolyte copolymer coagulant.

**38.** The use of any of any of claims 33 to 37 further comprising the addition of a flocculant to said waste water.

**39.** The use of claim 38 wherein said flocculant is a copolymer of acrylamide and acrylic acid.

**40.** Use of the polyelectrolyte copolymer of any of claims 1 to 14 in a method for clarifying waste water containing turbidity-causing components which method comprises:

a) adding to said water an effective turbidity-reducing amount of the polyelectrolyte copolymer as a coagulant;
b) mixing said polyelectrolyte copolymer and said water with a mechanical stirring device for sufficient time to allow flocculation of the turbidity-causing components; and then
c) separating the flocculated turbidity-causing components from the wastewater to obtain clarified water.

**41.** The use of claim 40 wherein the polyelectrolyte copolymer comprises units of diallyldimethyl ammonium chloride and units of vinyl trimethoxysilane.

**42.** The use of claim 40 or 41 wherein the polyelectrolyte copolymer coagulant has a reduced specific viscosity in one molar sodium nitrate for 1 % polymer actives of from 0.2 to 5 dl/g, preferably from 0.5 to 4.0 dl/g, most preferably from 0.7 to 3.0 dl/g.

**43.** The use of any of claims 40 to 42 wherein the polyelectrolyte copolymer comprises units of diallyldimethyl ammonium chloride and units of vinyl trimethoxysilane in a mole ratio of from 99.99:0.01 to 80:20, preferably from 99.9:0.1 to 85:15, most preferably from 99.9:0.1 to 95.0:5.0.

**44.** The use of any of claims 40 to 43 wherein the waste water is treated with from 0.1 to 500 ppm, preferably from 0.5 to 100 ppm, most preferably from 2 to 30 ppm of the polyelectrolyte copolymer coagulant.

**45.** The use of any of claims 40 to 44 further comprising the addition of a flocculant to said waste water.

**46.** The use of claim 45 wherein said flocculant is a copolymer of acrylamide and acrylic acid.

**47.** Use of the polyelectrolyte copolymer of any of claims 1 to 14 in a method for controlling pitch in papermaking systems which method comprises adding to the pulp and paper process water as a coagulant, the polyelectrolyte copolymer in an amount of from 0.5 to 5.0 kg/t (0.4 to 4 pounds per ton) of dry pulp.

**48.** The use of claim 47 wherein the polyelectrolyte copolymer comprises units of a hydrophobic or hydrophilic second monomer selected from the group consisting of acrylamide, acrylic acid and its alkali metal salts, dimethylaminoethyl or propyl acrylate methyl chloride quaternary, diallyldimethyl ammonium chloride, maleimide, vinyl formamide, vinyl acetate, itaconic acid, maleic anhydride, fumaric acid, aconic acid, acrylamido methylpropane sulfonic acid and its alkali metal salts, $C_6$ - $C_{20}$ alkyl esters of acrylic acid, phenethyl ester of acrylic acid, nonyl-$\alpha$-benzyl ester of acrylic acid, dimethyl acrylamide, diethyl acrylamide, tert-butyl acrylamide, dimethylaminoethylacrylate benzyl chloride quaternary, 3-methylacrylamide propyltrimethyl ammonium chloride, acrylamidomethyl butanoic acid and combinations thereof and units of said vinyl siloxane monomer in a molar ratio in the range between 99.99:0.01 and 90:10.

**49.** The use of any of claims 47 and 48 wherein the polyelectrolyte copolymer comprises units of a hydrophilic monomer selected from the group consisting of: acrylamide, acrylic acid and its alkali metals salts, quaternary acrylates, diallyldimethyl ammonium chloride, maleimide, vinyl formamide, itaconic acid, maleic anhydride, fumaric acid, aconic acid, acrylamido methyl propane sulfonic acid and its alkali metals salts.

**50.** The use of any of claims 47 to 49 wherein said polyelectrolyte copolymer comprises units of a hydrophobic monomer which is either a hydrophobic water-insoluble monomer or a hydrophobic water-soluble monomer.

**51.** The use of claim 50 wherein said hydrophobic water-insoluble monomer is selected from the group consisting of: higher alkyl esters of acrylic acid and alkylaryl esters of acrylic acid.

**52.** The use of claim 50 wherein said hydrophobic water-soluble monomer is selected from the group consisting of: acrylic esters, alkyl acrylamides, dimethylaminoethyl acrylate benzyl chloride quaternary, 3-methylacrylamide propyltrimethyl ammonium chloride, and acrylamidomethyl butanoic acid.

**53.** The use of any of claims 47 to 52 wherein said vinyl alkoxysilane monomer is capable of radical polymerization and is selected from the group consisting of: vinyl trimethoxysilane and vinyl triethoxysilane.

**54.** The use of any of claims 47 to 53 wherein said polyelectrolyte copolymer is added to said pulp and paper process water in an amount between 0.5 and 5.0 kg/t (0.4 and 4 pounds per ton) of dry pulp.

**Patentansprüche**

**1.** Oberflächenaktives, Silicium enthaltendes Polyelektrolyt-Copolymer, das umfaßt:

A) wiederkehrende Einheiten mindestens eines Vinylalkoxysilan-Monomers als ein erstes Monomer, das vorzugsweise mono- oder disubstituiert ist und vorzugsweise 1 bis 3 $C_1$-$C_4$-Alkoxygruppen aufweist, in einer Menge von 0,01 bis 20 Mol-%; und

B) wiederkehrende Einheiten mindestens eines zweiten Monomers, ausgewählt aus der Gruppe, die besteht aus (Meth)Acrylamid, (Meth)Acrylsäure und ihren Alkalimetallsalzen, Dimethylaminoethyl- oder -propyl(meth) acrylat-methylchlorid-Quaternärsalz, Diallyldimethylammoniumhalogenid, Maleimid, Vinylformamid, Vinylacetat, Itaconsäure, Maleinsäureanhydrid, Fumarsäure, Aconitsäure, (Meth)Acrylamidomethylpropan-sulfonsäure und ihren Alkalimetallsalzen, $C_6$-$C_{20}$-Alkylestern der (Meth)Acrylsäure, dem Phenethylester der (Meth) Acrylsäure, dem Nonyl-$\alpha$-benzylester der (Meth)Acrylsäure, Dimethyl(meth)acrylamid, Diethyl(meth)acrylamid, t-Butyl(meth)acrylamid, Dimethylaminoethyl(meth)acrylat-Quaternärsalz, 3-Methyl(meth)acrylamidpropyltrimethylammoniumhalogenid, (Meth)Acrylamidomethylbutansäure und Kombinationen davon, in einer Menge von 99,99 bis 80 Mol-%,

und das eine spezifische Viskositätszahl (eine reduzierte spezifische Viskosität) in einer 1 molaren Natriumnitrat-Lösung, die 1 % Polymer-Aktivmaterialien enthält, von 0,1 bis 8 dl/g aufweist.

**2.** Copolymer nach Anspruch 1, worin das Vinylalkoxysilan-Monomer ausgewählt wird aus der Gruppe, die besteht aus Vinyltrimethoxysilan und Vinyltriethoxysilan.

**3.** Copolymer nach Anspruch 1 oder 2, worin das quaternäre Salz der Komponente (B) ein $C_1$-$C_{20}$-Rest, ausgewählt aus der Gruppe, die besteht aus Alkyl, Aryl und Alkylaryl, ist.

**4.** Copolymer nach Anspruch 3, worin das quaternäre Salz ein Methylhalogenid-Quaternärsalz, vorzugsweise ein Methylchlorid-Quaternärsalz, oder ein Benzylhalogenid-Quaternärsalz, vorzugsweise ein Benzylchlorid-Quaternärsalz, ist.

**5.** Copolymer nach einem der Ansprüche 1 bis 4, worin das Ammoniumhalogenid-Salz der Komponente (B) ein Ammoniumchlorid-, Ammoniumbromid- oder Ammoniumiodid-Salz, vorzugsweise ein Ammoniumchlorid-Salz, ist.

**6.** Copolymer nach einem der Ansprüche 1 bis 5, worin das Molverhältnis von Komponente (A) zu Komponente (B) in dem Bereich von (0,1 bis 15):(99,9 bis 85), vorzugsweise von (0,1 bis 5,0):(99,9 bis 95), insbesondere von (0,5 bis 4):(99,5 bis 96), am meisten bevorzugt von (0,5 bis 2):(99,5 bis 98), liegt.

**7.** Copolymer nach einem der Ansprüche 1 bis 6, das eine spezifische Viskositätszahl (eine reduzierte spezifische Viskosität) in einer 1 molaren Natriumnitrat-Lösung, die 1 % Polymer-Aktivmaterialien enthält, von 0,5 bis 5 dl/g, vorzugsweise von 0,7 bis 3,0 dl/g, aufweist.

**8.** Copolymer nach einem der Ansprüche 1 bis 7, das als Komponente (B) wiederkehrende Einheiten eines Diallyldimethylammoniumhalogenids, vorzugsweise von Diallyldimethylammoniumchlorid, und als Komponente (A) wiederkehrende Einheiten eines Vinylalkoxysilans, vorzugsweise von Vinyltrimethoxysilan oder Vinyltriethoxysilan, aufweist.

**9.** Copolymer nach einem der Ansprüche 1 bis 8, das durch freie Radikal-Polymerisation hergestellt worden ist.

**10.** Copolymer nach einem der Ansprüche 1 bis 9, worin das genannte zweite Monomer ausgewählt wird aus der Gruppe, die besteht aus hydrophilen Monomeren und hydrophoben Monomeren.

**11.** Copolymer nach Anspruch 10, worin das genannte hydrophile Monomer ausgewählt wird aus der Gruppe, die besteht aus Acrylamid, Acrylsäure und ihren Alkalimetallsalzen, quaternären Acrylaten, Diallyldimethylammoniumchlorid, Maleimid, Vinylformamid, Itaconsäure, Maleinsäureanhydrid, Fumarsäure, Aconitsäure, Acrylamidomethylpropan-sulfonsäure und ihren Alkalimetallsalzen.

**12.** Copolymer nach Anspruch 10, worin das genannte hydrophobe Monomer entweder ein hydrophobes wasserunlösliches Monomer oder ein hydrophobes wasserlösliches Monomer ist.

**13.** Copolymer nach Anspruch 12, worin das genannte hydrophobe wasserunlösliche Monomer ausgewählt wird aus der Gruppe, die besteht aus den höheren Alkylestern der Acrylsäure und den Alkylarylestern der Acrylsäure.

**14.** Copolymer nach Anspruch 12, worin das genannte hydrophobe wasserlösliche Monomer ausgewählt wird aus der Gruppe, die besteht aus Acrylsäureestern, Alkylacrylamiden, Dimethylaminoethylacrylat-benzylchlorid-Quaternärsalz, 3-Methylacrylamidpropyl-trimethylammoniumchlorid und Acrylamidomethylbutansäure.

**15.** Verwendung des Polyelektrolyt-Copolymers nach einem der Ansprüche 1 bis 14 in einem Verfahren zum Klären (Reinigen) eines Druckfarbe enthaltenden Abwasserstroms aus der Recycling-papierherstellung, das umfaßt die Zugabe einer wirksamen deinkenden Menge des Polyelektrolyt-Copolymers als Koagulans zu dem Druckfarbe enthalten Abwasserstrom aus der Recyclingpapier-Herstellung.

**16.** Verwendung nach Anspruch 15, worin das Polyelektrolyt-Copolymer 0,01 bis 10 Mol-% Einheiten eines Vinylalkoxysilan-Monomers, ausgewählt aus der Gruppe, die besteht aus Vinyltrimethoxysilan und Vinyltriethoxysilan, und 99,99 bis 90 Mol-% Einheiten Diallyldimethylammoniumchlorid umfaßt.

**17.** Verwendung nach Anspruch 15 oder 16, worin das Polyelektrolyt-Copolymer dem Druckfarbe enthaltenden Abwasserstrom in einer Menge von 0,25 bis 100 ppm, vorzugsweise von 0,5 bis 75 ppm, am meisten bevorzugt von 1 bis 50 ppm, zugegeben wird.

**18.** Verwendung nach einem der Ansprüche 15 bis 17, worin die spezifische Viskositätszahl (die reduzierte spezifische Viskosität) des Polyelektrolyt-Copolymers in einer 1 molaren Natriumnitrat-Lösung mit 1 % Polymer-Aktivmaterialien 0,1 bis 4 dl/g, vorzugsweise 0,5 bis 3 dl/g, am meisten bevorzugt 0,8 bis 2,5 dl/g, beträgt.

**19.** Verwendung nach einem der Ansprüche 15 bis 18, worin das Polyelektrolyt-Copolymer Einheiten von Diallyldimethylammoniumchlorid und Einheiten von Vinyltrimethoxysilan in einem Molverhältnis von 99,99:0,01 bis 95,0:5,0 aufweist.

**20.** Verwendung nach einem der Ansprüche 15 bis 19, die außerdem umfaßt die Zugabe eines Flockungsmittels zu dem genannten Abwasserstrom.

**21.** Verwendung nach Anspruch 20, worin das genannte Flockungsmittel ein Copolymer von Acrylamid und Acrylsäure ist.

**22.** Verwendung des Polyelektrolyt-Copolymers nach einem der Ansprüche 1 bis 14 in einem Verfahren zur Entfernung von Abfallöl aus einem industriellen ölhaltigen Abwasser, das Öl, dispergierte Feststoffe und emulgiertes Wasser enthält, das die Stufen umfaßt:

a) Behandeln des ölhaltigen Abwassers mit einer wirksamen Menge des Polyelektrolyt-Copolymers als Demulgator;
b) Ausflockenlassen des Öls, des emulgierten Wassers und der dispergierten Feststoffe und Auftrennenlassen derselben in Schichten; und
c) anschließendes Entfernen der Wasserschicht aus dem behandelten Abwasser.

**23.** Verwendung nach Anspruch 22, worin das Polyelektrolyt-Copolymer Einheiten von Diallyldimethylammoniumchlorid und Einheiten von Vinyltrimethoxysilan umfaßt.

**24.** Verwendung nach Anspruch 22 oder 23, worin der Polyelektrolyt-Copolymer-Demulgator eine spezifische Viskositätszahl (eine reduzierte spezifische Viskosität) in einer 1-molaren Natriumnitrat-Lösung mit 1 % Polymer-Aktivmaterialien von 0,2 bis 5,0 dl/g, vorzugsweise von 0,5 bis 4,0 dl/g, am meisten bevorzugt von 0,7 bis 3,0 dl/g, aufweist.

**25.** Verwendung nach einem der Ansprüche 22 bis 24, worin das Polyelektrolyt-Copolymer Einheiten von Diallyldimethylammoniumchlorid und Einheiten von Vinyltrimethoxysilan in einem Molverhältnis von 99,99:0,01 bis 80:20, vorzugsweise von 99,9:0,1 bis 85:15, am meisten bevorzugt von 99,9:0,1 bis 95,0:5,0, umfaßt.

**26.** Verwendung nach einem der Ansprüche 22 bis 25, worin die dem ölhaltigen Abwasser zugegebene wirksame Menge des Polyelektrolyt-Copolymer-Demulgators mindestens 0,005 Gew.-%, vorzugsweise mindestens 0,05 Gew.-%, am meisten bevorzugt mindestens 0,1 Gew.-%, bezogen auf das Gewicht der genannten Flüssigkeit, beträgt.

**27.** Verwendung des Polyelektrolyt-Copolymers nach einem der Ansprüche 1 bis 14 in einem Verfahren zur Konditionierung von Lebensmittelverarbeitungs-Abwasser vor der chemischen Entwässerung, das die Stufe Behandeln des Lebensmittelsverarbeitungs-Abwassers mit einer wirksamen Menge des Polyelektrolyt-Copolymers als Koagulans umfaßt.

**28.** Verwendung nach Anspruch 27, worin das Polyelektrolyt-Copolymer Einheiten von Diallyldimethylammoniumchlorid und Einheiten von Vinyltrimethoxysilan umfaßt.

**29.** Verwendung nach Anspruch 27 oder 28, worin das Polyelektrolyt-Copolymer-Koagulans eine spezifische Viskositätszahl (eine reduzierte spezifische Viskosität) in einer 1 molaren Natriumnitrat-Lösung mit 1 % Polymer-Aktivmaterialien von 0,2 bis 8 dl/g, vorzugsweise von 0,5 bis 5,0 dl/g, am meisten bevorzugt von 0,7 bis 3,0 dl/g, aufweist.

**30.** Verwendung nach einem der Ansprüche 27 bis 29, worin das Polyelektrolyt-Copolymer Einheiten von Diallyldimethylammoniumchlorid und Einheiten von Vinyltrimethoxysilan in einem Molverhältnis von 99,99:0,01 bis 80:20, vorzugsweise von 99,9:0,1 bis 85:15, umfaßt.

**31.** Verwendung nach einem der Ansprüche 27 bis 30, worin das Verfahren die weitere Stufe der Zugabe eines Flockungsmittels zu dem behandelten Lebensmittelverarbeitungs-Abwasser umfaßt.

**32.** Verwendung nach einem der Ansprüche 27 bis 31, worin das Lebensmittelverarbeitungs-Abwasser mit 1 bis 500 ppm, vorzugsweise mit 10 bis 300 ppm, am meisten bevorzugt mit 20 bis 100 ppm, des Polyelektrolyt-Copolymer-Koagulans behandelt wird.

**33.** Verwendung des Polyelektrolyt-Copolymers nach einem der Ansprüche 1 bis 14 in einem Verfahren zum Entfärben eines Papierfabrik-Abwasserabstroms, der Farbkörper enthält, das umfaßt

a) das Behandeln des Farbkörper enthaltenden Abwasserstroms mit einer wirksamen entfärbenden Menge des Polyelektrolyt-Copolymers als Koagulans;
b) das Koagulieren der in dem Abwasserstrom vorhandenen Farbkörper; und
c) das anschließende Entfernen der koagulierten Farbkörper aus dem Abwasserstrom.

**34.** Verwendung nach Anspruch 33, worin das Polyelektrolyt-Copolymer Einheiten von Diallyldimethylammoniumchlorid und Einheiten von Vinyltrimethoxysilan umfaßt.

**35.** Verwendung nach Anspruch 33 oder 34, worin das Polyelektrolyt-Copolymer-Koagulans eine spezifische Viskositätszahl (eine reduzierte spezifische Viskosität) in einer 1 molaren Natriumnitrat-Lösung mit 1 % Polymer-Aktivmaterialien von 0,2 bis 5 dl/g, vorzugsweise von 0,5 bis 4,0 dl/g, am meisten bevorzugt von 0,7 bis 3,0 dl/g, aufweist.

**36.** Verwendung nach einem der Ansprüche 33 bis 35, worin das Polyelektrolyt-Copolymer Einheiten von Diallyldimethylammoniumchlorid und Einheiten von Vinyltrimethoxysilan in einem Molverhältnis von 99,99:0,01 bis 80:20, vorzugsweise von 99,9:0,1 bis 85:15, am meisten bevorzugt von 99,9:0,1 bis 95,0:5,0, aufweist.

**37.** Verwendung nach einem der Ansprüche 33 bis 36, worin der Papierfabrik-Abwasserstrom mit 1 bis 500 ppm, vorzugsweise mit 30 bis 200 ppm, am meisten bevorzugt mit 50 bis 120 ppm, des Polyelektrolyt-Colymer-Koagulans behandelt wird.

**38.** Verwendung nach einem der Ansprüche 33 bis 37, die außerdem die Zugabe eines Flockungsmittels zu dem genannten Abwasserstrom umfaßt.

**39.** Verwendung nach Anspruch 38, worin das genannte Flockungsmittel ein Copolymer von Acrylamid und Acrylsäure ist.

**40.** Verwendung des Polyelektrolyt-Copolymers nach einem der Ansprüche 1 bis 14 in einem Verfahren zum Klären eines Abwassers, das eine Trübung verursachende Komponenten enthält, das umfaßt:

a) die Zugabe einer wirksamen, die Trübung herabsetzenden Menge des Polyelektrolyt-Copolymers als Koagulans zu dem genannten Abwasser;
b) das Mischen des genannten Polyelektrolyt-Copolymers mit dem genannten Abwasser unter Verwendung einer mechanischen Rühreinrichtung für eine Zeitspanne, die ausreicht, um die Ausflockung der die Trübung verursachenden Komponenten zu ermöglichen; und
c) das anschließende Abtrennen der ausgeflockten, die Trübung verursachenden Komponenten von dem Abwasser unter Bildung von geklärtem Wasser.

**41.** Verwendung nach Anspruch 40, worin das Polyelektrolyt-Copolymer Einheiten von Diallyldimethylammoniumchlorid und Einheiten von Vinyltrimethoxysilan umfaßt.

**42.** Verwendung nach Anspruch 40 oder 41, worin das Polyelektrolyt-Copolymer-Koagulans eine spezifische Viskositätszahl (eine reduzierte spezifische Viskosität) in einer 1 molaren Natriumnitrat-Lösung mit 1 % Polymer-Aktivmaterialien von 0,2 bis 5 dl/g, vorzugsweise von 0,5 bis 4,0 dl/g, am meisten bevorzugt von 0,7 bis 3,0 dl/g, aufweist.

**43.** Verwendung nach einem der Ansprüche 40 bis 42, worin das Polyelektrolyt-Copolymer Einheiten von Diallyldimethylammoniumchlorid und Einheiten von Vinyltrimethoxysilan in einem Molverhältnis von 99,99:0,01 bis 80:20, vorzugsweise von 99,9:0,1 bis 85:15, am meisten bevorzugt von 99,9:0,1 bis 95,0:5,0, umfaßt.

**44.** Verwendung nach einem der Ansprüche 40 bis 43, worin der Abwasserstrom mit 0,1 bis 500 ppm, vorzugsweise mit 0,5 bis 100 ppm, am meisten bevorzugt mit 2 bis 30 ppm, des Polyelektrolyt-Copolymer-Koagulans behandelt wird.

**45.** Verwendung nach einem der Ansprüche 40 bis 44, die außerdem die Zugabe eines Flockungsmittels zu dem genannten Abwasserstrom umfaßt.

**46.** Verwendung nach Anspruch 45, worin das genannte Flockungsmittel ein Copolymer von Acrylamid und Acrylsäure ist.

**47.** Verwendung des Polyelektrolyt-Copolymers nach einem der Ansprüche 1 bis 14 in einem Verfahren zur Kontrolle des Zellstoffharzes (Teers) in Papierherstellungs-Systemen, das umfaßt die Zugabe des Polyelektrolyt-Copolymers in einer Menge von 0,5 bis 5,0 kg/t (0,4 - 4 Ibs/t) trockener Pulpe (Zellstoffmasse) als Koagulans zu dem Pulpen- und Papier-Prozeßwasser.

**48.** Verwendung nach Anspruch 47, worin das Polyelektrolyt-Copolymer Einheiten eines hydrophoben oder hydrophilen zweiten Monomers, ausgewählt aus der Gruppe, die besteht aus Acrylamid, Acrylsäure und ihren Alkalimetallsalzen, Dimethylaminoethyl- oder -propylacrylat-methylchlorid-Quaternärsalz, Diallyldimethylammoniumchlorid, Maleimid, Vinylformamid, Vinylacetat, Itaconsäre, Maleinsäureanhydrid, Fumarsäure, Aconitsäure, Acrylamidomethylpropan-sulfonsäure und ihren Alkalimetallsalzen, den $C_6$-$C_{20}$-Alkylestern der Acrylsäure, dem Phenethylester der Acrylsäure, dem Nonyl-$\alpha$-benzylester der Acrylsäure, Dimethylacrylamid, Diethylacrylamid, tert-Butylacrylamid, Dimethylaminoethylacrylat-benzylchlorid-Quaternärsalz, 3-Methylacrylamidpropyl-trimethylammoniumchlorid, Acrylamidomethylbutansäure und Kombinationen davon, und Einheiten des genannten Vinylsiloxan-Monomers in einem Molverhältnis in dem Bereich zwischen 99,99:0,01 und 90:10 umfaßt.

**49.** Verwendung nach einem der Ansprüche 47 und 48, worin das Polyelektrolyt-Copolymer Einheiten eines hydrophilen Monomers, ausgewählt aus der Gruppe, die besteht aus Acrylamid, Acrylsäure und ihren Alkalimetallsalzen, quaternären Acrylaten, Diallyldimethylammoniumchlorid, Maleimid, Vinylformamid, Itaconsäure, Maleinsäureanhydrid, Fumarsäure, Aconitsäure, Acrylamidomethylpropan-sulfonsäure und ihren Alkalimetallsalzen umfaßt.

**50.** Verwendung nach einem der Ansprüche 47 bis 49, worin das genannte Polyelektrolyt-Copolymer Einheiten eines hydrophoben Monomers umfaßt, bei dem es sich entweder um ein hydrophobes wasserunlösliches Monomer oder um ein hydrophobes wasserlösliches Monomer handelt.

**51.** Verwendung nach Anspruch 50, worin das genannte hydrophobe wasserunlösliche Monomer ausgewählt wird aus der Gruppe, die besteht aus den höheren Alkylestern der Acrylsäure und den Alkylarylestern der Acrylsäure.

**52.** Verwendung nach Anspruch 50, worin das genannte hydrophobe wasserlösliche Monomer ausgewählt wird aus der Gruppe, die besteht aus Acrylsäureestern, Alkylacrylamiden, Dimethylaminoethylacrylat-benzylchlorid-Quaternärsalz, 3-Methylacrylamidpropyl-trimethylammoniumchlorid und Acrylamidomethylbutansäure.

**53.** Verwendung nach einem der Ansprüche 47 bis 52, worin das genannte Vinylalkoxysilan-Monomer radikalisch polymerisierbar ist und ausgewählt wird aus der Gruppe, die besteht aus Vinyltrimethoxysilan und Vinyltriethoxysilan.

**54.** Verwendung nach einem der Ansprüche 47 bis 53, worin das genannte Polyelektrolyt-Copolymer dem Pulpen- und Papier-Prozeßwasser in einer Menge zwischen 0,5 und 5,0 kg/t (0,4 - 4 Ibs/t) trockener Pulpe (Zellstoffmasse) zugegeben wird.

**Revendications**

**1.** Copolymère polyélectrolytique tensio-actif contenant du silicium, comprenant:

A) des unités récurrentes d'au moins un monomère d'alkoxysilane vinylique en tant que premier monomère,

ce monomère étant de préférence mono- ou di-substitué et contenant de préférence 1 à 3 groupes de $C_1$-$C_4$-alkoxy, dans une quantité de 0,01 à 20 % molaire; et

B) des unités récurrentes d'au moins un second monomère choisi du groupe constitué de (méth)acrylamide, d'acide (méth)acrylique et ses sels de métaux alcalins, de sel quaternaire de chlorure méthylique de diméthylaminoéthyl- ou -propyl(méth)acrylate, d'halogénure de diallyldiméthyl ammonium, de maléimide, de formamide vinylique, d'acétate vinylique, d'acide itaconique, d'anhydride de l'acide maléique, d'acide fumarique, d'acide aconitique, d'acide sulfonique de (méth)acrylamido méthylpropane et ses sels de métaux alcalins, de $C_6$-$C_{20}$-esters alkyliques de l'acide (méth)acrylique, d'ester phénéthylique d'acide (méth)acrylique, d'ester nonyl-$\alpha$-benzylique d'acide (méth)acrylique, de diméthyl(méth)acrylamide, de diéthyl(méth)acrylamide, de t-butyl(méth)acrylamide, de sel quaternaire de diméthylaminoéthyl (méth)acrylate, d'halogénure de 3-méthyl (méth)acrylamide propyltriméthyl ammonium, d'acide de (méth)acrylamidométhylbutane et leurs combinaisons, dans une quantité de 99,99 à 80 % molaire,

le copolymère polyélectrolytique ayant une viscosité spécifique réduite de 0,1 à 8 dl/g dans une solution 1-molaire de nitrate de sodium contenant 1 % de matières actives de polymère.

**2.** Copolymère selon la revendication 1, dans lequel le monomère d'alkoxysilane vinylique est choisi du groupe constitué de triméthoxysilane vinylique et de triéthoxysilane vinylique.

**3.** Copolymère selon la revendication 1 ou 2, dans lequel le sel quaternaire du constituant (B) est un reste $C_1$-$C_{20}$, choisi du groupe constitué d'alkyle, d'aryle et d'alkylaryle.

**4.** Copolymère selon la revendication 3, dans lequel le sel quaternaire est un sel quaternaire d'un halogénure de méthyl, de préférence un sel quaternaire de chlorure de méthyl, ou un sel quaternaire d'un halogénure de benzyl, de préférence un sel quaternaire de chlorure de benzyl.

**5.** Copolymère selon l'une des revendications 1 à 4, dans lequel le sel d'halogénure d'ammonium du constituant (B) est un sel de chlorure d'ammonium, un sel de bromure d'ammonium ou un sel de iodure d'ammonium, de préférence un sel de chlorure d'ammonium.

**6.** Copolymère selon l'une des revendications 1 à 5, dans lequel le rapport molaire entre le constituant (A) et le constituant (B) est situé dans la gamme de (0,1 à 15):(99,9 à 85), de préférence de (0,1 à 5,0):(99,9 à 95), en particulier de (0,5 à 4):(99,5 à 96), et le plus préféré de (0,5 à 2):(99,5 à 98).

**7.** Copolymère selon l'une des revendications 1 à 6, qui présente une viscosité spécifique réduite de 0,5 à 5 dl/g, de préférence de 0,7 à 3,0 dl/g, dans une solution 1-molaire de nitrate de sodium contenant 1 % de matières actives de polymère.

**8.** Copolymère selon l'une des revendications 1 à 7, comprenant en tant que constituant (B) des unités récurrentes d'un halogénure de diallyldiméthyl ammonium, de préférence de chlorure de diallyldiméthyl ammonium, et en tant que constituant (A) des unités récurrentes d'un alkoxysilane vinylique, de préférence de triméthoxysilane vinylique ou de triéthoxysilane vinylique.

**9.** Copolymère selon l'une des revendications 1 à 8, qui est réalisé par polymérisation par des radicaux libres.

**10.** Copolymère selon l'une des revendications 1 à 9, dans lequel ledit second monomère est choisi du groupe constitué de monomères hydrophiles et de monomères hydrophobes.

**11.** Copolymère selon la revendication 10, dans lequel ledit monomère hydrophile est choisi du groupe constitue d'acrylamide, d'acide acrylique et de ses sels de métaux alcalins, d'acrylates quaternaires, de chlorure de diallyldiméthyl ammonium, de maléimide, de formamide vinylique, d'acide itaconique, d'anhydride d'acide maléique, d'acide fumarique, d'acide aconitique, d'acide sulfonique d'acrylamido méthylpropane et ses sels de métaux alcalins.

**12.** Copolymère selon la revendication 10, dans lequel ledit monomère hydrophobe est soit un monomère hydrophobe insoluble dans l'eau soit un monomère hydrophobe soluble dans l'eau.

**13.** Copolymère selon la revendication 12, dans lequel ledit monomère hydrophobe insoluble dans l'eau est choisi du groupe constitué des esters alkyliques plus élevés d'acide acrylique et des esters alkylaryliques d'acide acrylique.

**14.** Copolymère selon la revendication 12, dans lequel ledit monomère hydrophobe soluble dans l'eau est choisi du groupe constitué d'esters d'acide acrylique, d'alkylacrylamides, de sel quaternaire de chlorure benzylique de diméthylaminoéthyl acrylate, de chlorure de 3-méthylacrylamide propyltriméthyl ammonium, et d'acide d'acrylamidométhylbutane.

**15.** Utilisation du copolymère polyélectrolytique selon l'une des revendications 1 à 14 dans un procédé pour la clarification des eaux usées contenant de l'encre provenant de la production de papier recyclé, ledit procédé comprenant l'addition aux eaux usées contenant de l'encre provenant de la production de papier recyclé d'une quantité effective du copolymère polyélectrolytique en tant que coagulant pour l'élimination de l'encre.

**16.** Utilisation selon la revendication 15, dans laquelle le copolymère polyélectrolytique contient 0,01 à 10 % molaire d'unités d'un monomère d'alkoxysilane vinylique choisi du groupe constitué de triméthoxysilane vinylique et de triéthoxysilane vinylique et de 99,99 à 90 % molaire d'unités de chlorure de diallylméthyl ammonium.

**17.** Utilisation selon la revendication 15 ou 16, dans laquelle le copolymère polyélectrolytique est ajouté aux dites eaux usées contenant de l'encre dans une quantité de 0,25 à 100 ppm, de préférence de 0,5 à 75 ppm, et le plus préféré de 1 à 50 ppm.

**18.** Utilisation selon l'une des revendications 15 à 17, dans laquelle la viscosité spécifique réduite du copolymère polyélectrolytique dans une solution 1-molaire de nitrate de sodium pour 1% de matières actives de polymère est de 0,1 à 4 dl/g, de préférence de 0,5 à 3 dl/g, et le plus préféré de 0,8 à 2,5 dl/g.

**19.** Utilisation selon l'une des revendications 15 à 18, dans laquelle le copolymère polyélectrolytique comprend des unités de chlorure de diallyldiméthyl ammonium et des unités de triméthoxysilane vinylique dans un rapport molaire de 99,99 : 0,01 à 95,0 : 5,0.

**20.** Utilisation selon l'une des revendications 15 à 19, comprenant en outre l'addition d'un agent floculant aux dites eaux usées.

**21.** Utilisation selon la revendication 20, dans laquelle ledit agent floculant est un copolymère d'acrylamide et d'acide acrylique.

**22.** Utilisation du copolymère polyélectrolytique selon l'une des revendications 1 à 14 dans un procédé pour l'élimination d'huile usée des eaux usées huileuses industrielles qui contiennent de l'huile, des matières solides dispersées et de l'eau émulsifiée, le procédé comprenant les étapes de:

a) traiter les eaux usées huileuses avec une quantité effective du copolymère polyélectrolytique en tant qu'agent desémulsifiant,
b) permettre à l'huile, aux eaux émulsifiées et aux matières solides dispersées de floculer et de se séparer en couches, et puis
c) éliminer la couche d'eau des eaux usées traitées.

**23.** Utilisation selon la revendication 22, dans laquelle le copolymère polyélectrolytique comprend des unités de chlorure de diallyldiméthyl ammonium et des unités de triméthoxysilane vinylique.

**24.** Utilisation selon la revendication 22 ou 23, dans laquelle l'agent desémulsifiant de copolymère polyélectrolytique a une viscosité spécifique réduite dans une solution 1-molaire de nitrate de sodium pour 1% de matières actives de polymère de 0,2 à 5,0 dl/g, de préférence de 0,5 à 4,0 dl/g, et le plus préféré de 0,7 à 3,0 dl/g.

**25.** Utilisation selon l'une des revendications 22 à 24, dans laquelle le copolymère polyélectrolytique comprend des unités de chlorure de diallyldiméthyl ammonium et des unités de triméthoxysilane vinylique dans un rapport molaire de 99,99:0,01 à 80:20, de préférence de 99,9:0,1 à 85:15, et le plus préféré de 99,9:0,1 à 95,0:5,0.

**26.** Utilisation selon l'une des revendications 22 à 25, dans laquelle la quantité effective de l'agent desémulsifiant de copolymère polyélectrolytique ajoutée aux eaux usées huileuses est d'au moins 0,005 % en poids, de préférence

d'au moins 0,05 % en poids, et le plus préféré d'au moins 0,1 % en poids par rapport au poids dudit fluide.

**27.** Utilisation du copolymère polyélectrolytique selon l'une des revendications 1 à 14 dans un procédé pour le conditionnement des eaux usées du traitement des denrées alimentaires avant l'extraction chimique de l'humidité, le procédé comprenant l'étape de traitement des eaux usées du traitement des denrées alimentaires avec une quantité effective du copolymère polyélectrolytique en tant qu'agent coagulant.

**28.** Utilisation selon la revendication 27, dans laquelle le copolymère polyélectrolytique comprend des unités de chlorure de diallyldiméthyl ammonium et des unités de triméthoxysilane vinylique.

**29.** Utilisation selon la revendication 27 ou 28, dans laquelle l'agent coagulant de copolymère polyélectrolytique a une viscosité spécifique réduite dans une solution 1-molaire de nitrate de sodium pour 1% de matières actives de polymère de 0,2 à 8 dl/g, de préférence de 0,5 à 5,0 dl/g, et le plus préféré de 0,7 à 3,0 dl/g.

**30.** Utilisation selon l'une des revendications 27 à 29, dans laquelle le copolymère polyélectrolytique comprend des unités de chlorure de diallyldiméthyl ammonium et des unités de triméthoxysilane vinylique dans un rapport molaire de 99,99:0,01 à 80:20, de préférence de 99,9:0,1 à 85:15.

**31.** Utilisation selon l'une des revendications 27 à 30, dans laquelle le procédé comprend l'étape supplémentaire de l'addition d'un agent floculant aux eaux usées traitées du traitement des denrées alimentaires.

**32.** Utilisation selon l'une des revendications 27 à 31, dans laquelle les eaux usées du traitement des denrées alimentaires sont traitées avec 1 à 500 ppm, de préférence 10 à 300 ppm, et le plus préféré 20 à 100 ppm de l'agent coagulant de copolymère polyélectrolytique.

**33.** Utilisation du copolymère polyélectrolytique selon l'une des revendications 1 à 14 dans un procédé pour enlever de la couleur des eaux usées contenant des corps colorés d'un moulin à papier, ledit procédé comprenant les étapes de

a) traiter les eaux usées contenant des corps colorés avec une quantité effective d'élimination de la couleur du copolymère polyélectrolytique en tant qu'agent coagulant,
b) coaguler les corps colorés présents dans les eaux usées et puis
c) éliminer les corps colorés coagulés des eaux usées.

**34.** Utilisation selon la revendication 33, dans laquelle le copolymère polyélectrolytique comprend des unités de chlorure de diallyldiméthyl ammonium et des unités de triméthoxysilane vinylique.

**35.** Utilisation selon la revendication 33 ou 34, dans laquelle le copolymère polyélectrolytique a une viscosité spécifique réduite dans une solution 1-molaire de nitrate de sodium pour 1% de matières actives de polymère de 0,2 à 5 dl/g, de préférence de 0,5 à 4,0 dl/g, et le plus préféré de 0,7 à 3,0 dl/g.

**36.** Utilisation selon l'une des revendications 33 à 35, dans laquelle le copolymère polyélectrolytique comprend des unités de chlorure de diallyldiméthyl ammonium et des unités de triméthoxysilane vinylique dans un rapport molaire de 99,99:0,01 à 80:20, de préférence de 99,9:0,1 à 85:15, et le plus préféré de 99,9:0,1 à 95,0:5,0.

**37.** Utilisation selon l'une des revendications 33 à 36, dans laquelle les eaux usées du moulin à papier sont traités avec 1 à 500 ppm, de préférence 30 à 200 ppm, et le plus préféré 50 à 120 ppm de l'agent coagulant de copolymère polyélectrolytique.

**38.** Utilisation selon l'une des revendications 33 à 37, comprenant en outre l'addition d'un agent floculant aux dites eaux usées.

**39.** Utilisation selon la revendication 38, dans laquelle ledit agent floculant est un copolymère d'acrylamide et d'acide acrylique.

**40.** Utilisation du copolymère polyélectrolytique selon l'une des revendications 1 à 14 dans un procédé pour clarifier des eaux usées contenant des composants causant une turbidité, ledit procédé comprenant les étapes de:

a) ajouter aux dites eaux usées une quantité effective du copolymère polyélectrolytique en tant qu'agent coagulant réduisant la turbidité

b) mélanger ledit copolymère polyélectrolytique et les eaux usées à l'aide d'un dispositif mélangeur mécanique pour une période de temps suffisante pour permettre la floculation des composants causant la turbidité, et puis

c) séparer les composants floculés causant la turbidité des eaux usées pour obtenir une eau clarifiée.

**41.** Utilisation selon la revendication 40, dans laquelle le copolymère polyélectrolytique comprend des unités de chlorure de diallyldiméthyl ammonium et des unités de triméthoxysilane vinylique.

**42.** Utilisation selon la revendication 40 ou 41, dans laquelle l'agent coagulant de copolymère polyélectrolytique a une viscosité spécifique réduite dans une solution 1-molaire de nitrate de sodium pour 1% de matières actives de polymère de 0,2 à 5 dl/g, de préférence de 0,5 à 4,0 dl/g, et le plus préféré de 0,7 à 3,0 dl/g.

**43.** Utilisation selon l'une des revendications 40 à 42, dans laquelle le copolymère polyélectrolytique comprend des unités de chlorure de diallyldiméthyl ammonium et des unités de triméthoxysilane vinylique dans un rapport molaire de 99,99:0,01 à 80:20, de préférence de 99,9:0,1 à 85:15, et le plus préféré de 99,9:0,1 à 95,0:5,0.

**44.** Utilisation selon l'une des revendications 40 à 43, dans laquelle les eaux usées sont traitées avec 0,1 à 500 ppm, de préférence 0,5 à 100 ppm, et le plus préféré 2 à 30 ppm de l'agent coagulant de copolymère polyélectrolytique.

**45.** Utilisation selon l'une des revendications 40 à 44 comprenant en outre l'addition d'un agent floculant aux dites eaux usées.

**46.** Utilisation selon la revendication 45, dans laquelle ledit agent floculant est un copolymère d'acrylamide et d'acide acrylique.

**47.** Utilisation du copolymère polyélectrolytique selon l'une des revendications 1 à 14 dans un procédé pour contrôler le goudron dans des systèmes de fabrication de papier, ledit procédé comprenant l'étape d'addition dudit copolymère polyélectrolytique en tant qu'agent coagulant à l'eau de pâte et de conditionnement de papier, dans une quantité de 0,5 à 5,0 kg/t (de 0,4 à 4 livres par tonne) de pâte sèche.

**48.** Utilisation selon la revendication 47, dans laquelle le copolymère polyélectrolytique comprend des unités d'un second monomère hydrophobe ou hydrophile choisi du groupe constitué d'acrylamide, d'acide acrylique et ses sels de métaux alcalins, de sel quaternaire de chlorure méthylique de diméthylaminoéthyl- ou -propylacrylate, de chlorure de diallyldiméthyl ammonium, de maléimide, de formamide vinylique, d'acétate vinylique, d'acide itaconique, d'anhydride d'acide maléique, d'acide fumarique, d'acide aconitique, d'acide sulfonique d'acrylamido méthylpropane et ses sels de métaux alcalins, de $C_6$-$C_{20}$-esters alkyliques de l'acide acrylique, d'ester phénéthylique d'acide acrylique, d'ester nonyl-$\alpha$-benzylique d'acide acrylique, de diméthyl acrylamide, de diéthyl acrylamide, de tert-butyl acrylamide, de sel quaternaire de chlorure benzylique de diméthylamino éthylacrylate, de chlorure de 3-méthylacrylamide propyltriméthyl ammonium, d'acide d'acrylamidométhylbutane et leurs combinaisons, et des unités dudit monomère de siloxane vinylique dans un rapport molaire entre 99,99:0,01 et 90:10.

**49.** Utilisation selon la revendication 47 ou 48, dans laquelle le copolymère polyélectrolytique comprend des unités d'un monomère hydrophile choisi du groupe constitué d'acrylamide, d'acide acrylique et ses sels de métaux alcalins, des acrylates quaternaires, de chlorure de diallyldiméthyl ammonium, de maléimide, de formamide vinylique, d'acide itaconitique, d'anhydride d'acide maléique, d'acide fumarique, d'acide aconitique, d'acide sulfonique d'acrylamido méthyl propane et ses sels de métaux alcalins.

**50.** Utilisation selon l'une des revendications 47 à 49, dans laquelle ledit copolymère polyélectrolytique comprend des unités d'un monomère hydrophobe qui est soit un monomère hydrophobe insoluble dans l'eau soit un monomére hydrophobe soluble dans l'eau.

**51.** Utilisation selon la revendication 50, dans laquelle ledit monomère hydrophobe insoluble dans l'eau est choisi du groupe constitué d'esters alkyliques plus élevés d'acide acrylique et d'esters alkylaryliques d'acide acrylique.

**52.** Utilisation selon la revendications 50, dans laquelle ledit monomère hydrophobe soluble dans l'eau est choisi du groupe constitué d'esters d'acide acrylique, d'alkyl acrylamides, de sel quaternaire de chlorure benzylique de diméthylamino éthylacrylate, de chlorure de 3-méthylacrylamide propyltriméthyl ammonium et d'acide d'acrylamidométhylbutane.

**53.** Utilisation selon l'une des revendications 47 à 52, dans laquelle ledit monomère d'alkoxysilane vinylique est capable d'une polyméristion radicale et il est choisi du groupe constitué de triméthoxysilane vinylique et de triéthoxysilane vinylique.

**54.** Utilisation selon l'une des revendications 47 à 53, dans laquelle ledit copolymére polyélectrolytique est ajouté à ladite eau de pâte et de traitement de papier dans une quantité de 0,5 à 5,0 kg/t (de 0,4 à 4 livres par tonne) de pâte sèche.

FIG. 1

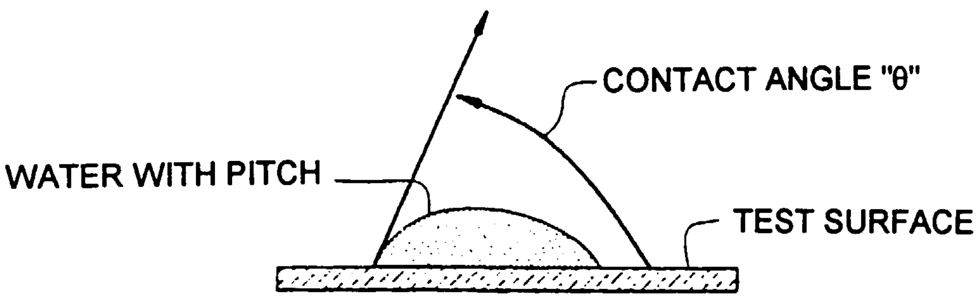

FIG. 2

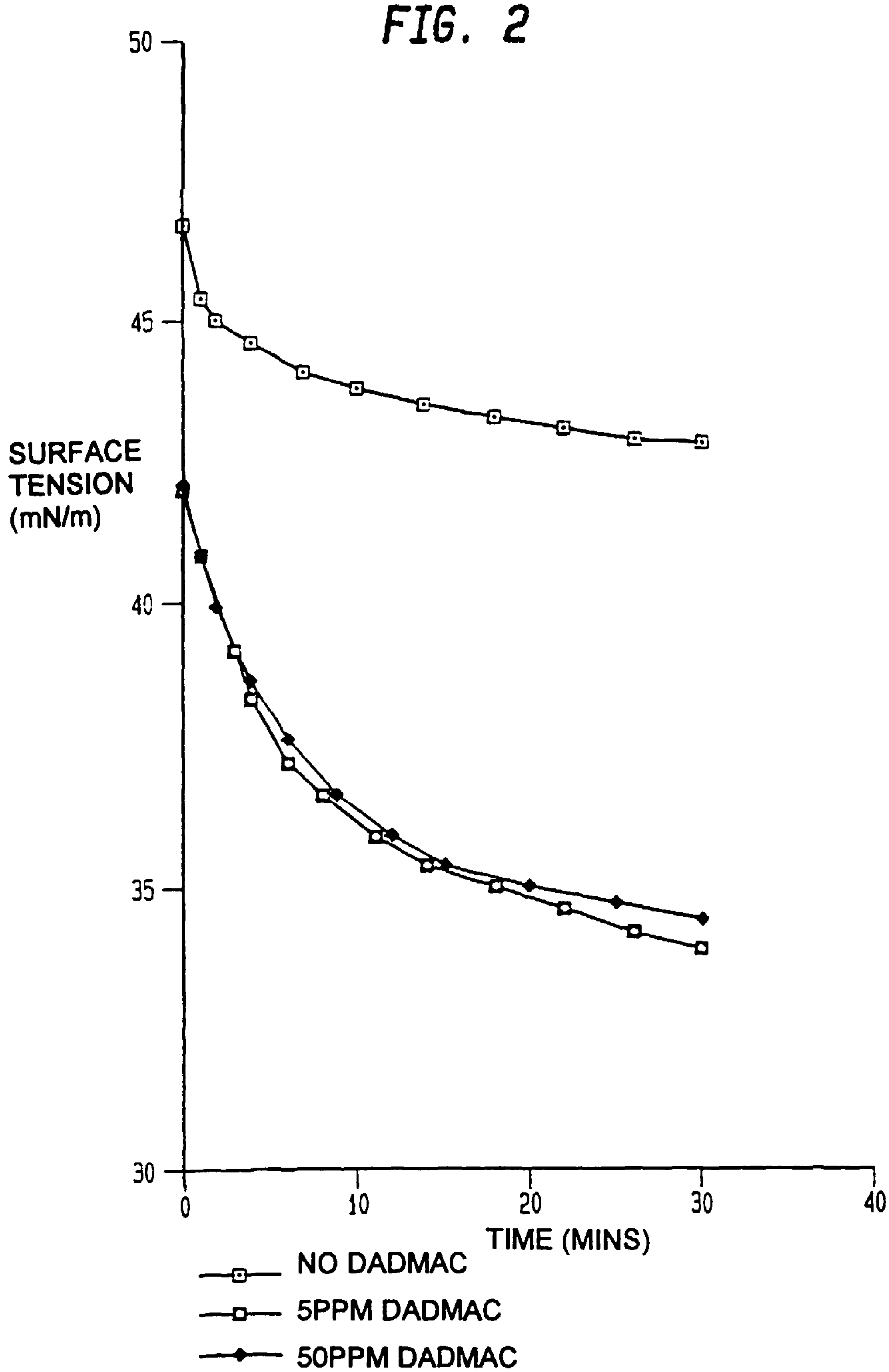
50
45
40
35
30
SURFACE
TENSION
(mN/m)
0
10
20
30
40
TIME (MINS)
NO DADMAC
5PPM DADMAC
50PPM DADMAC

FIG. 3

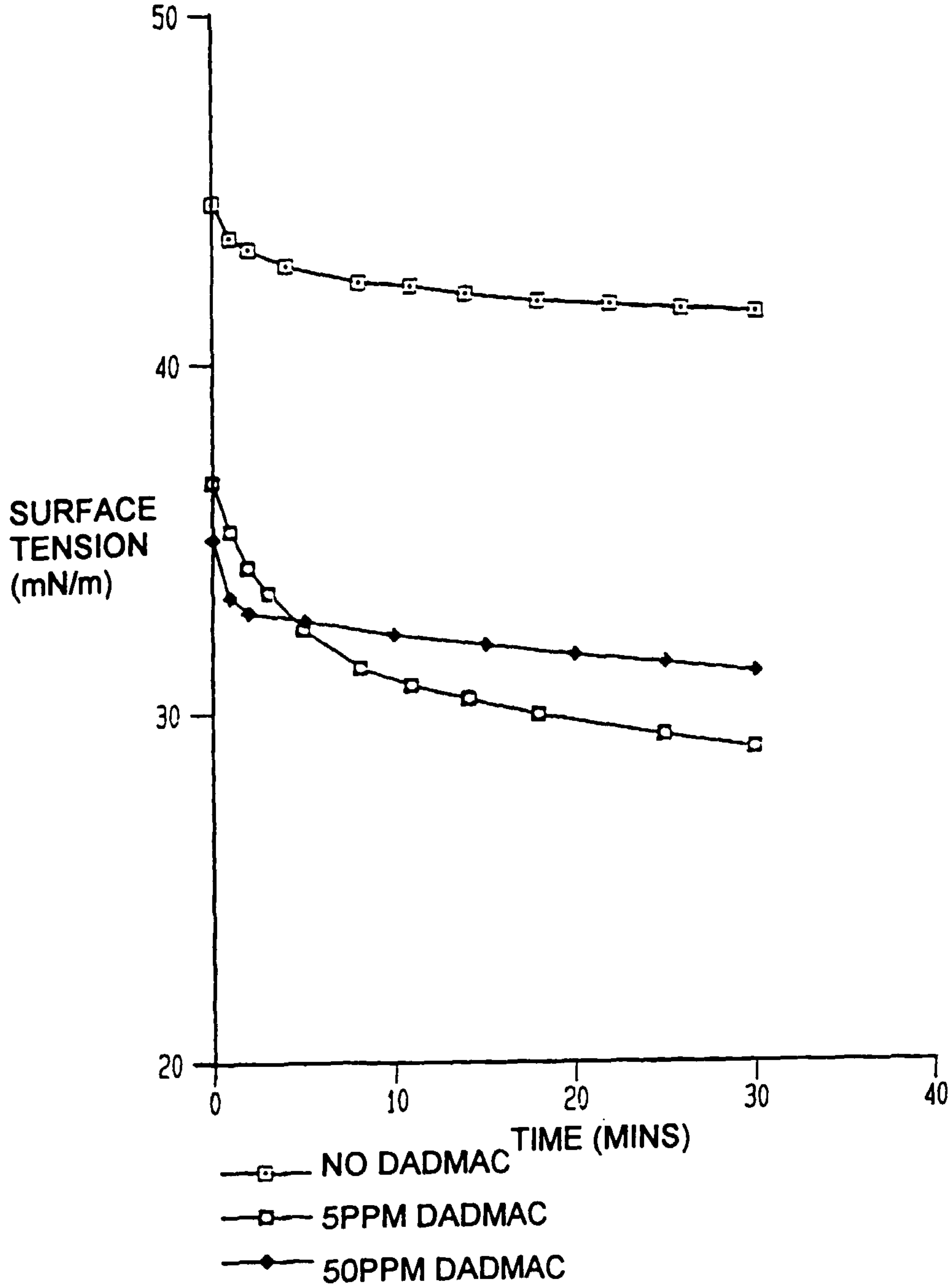
50
40
30
20
SURFACE
TENSION
(mN/m)
0
10
20
30
40
TIME (MINS)
NO DADMAC
5PPM DADMAC
50PPM DADMAC

FIG. 4

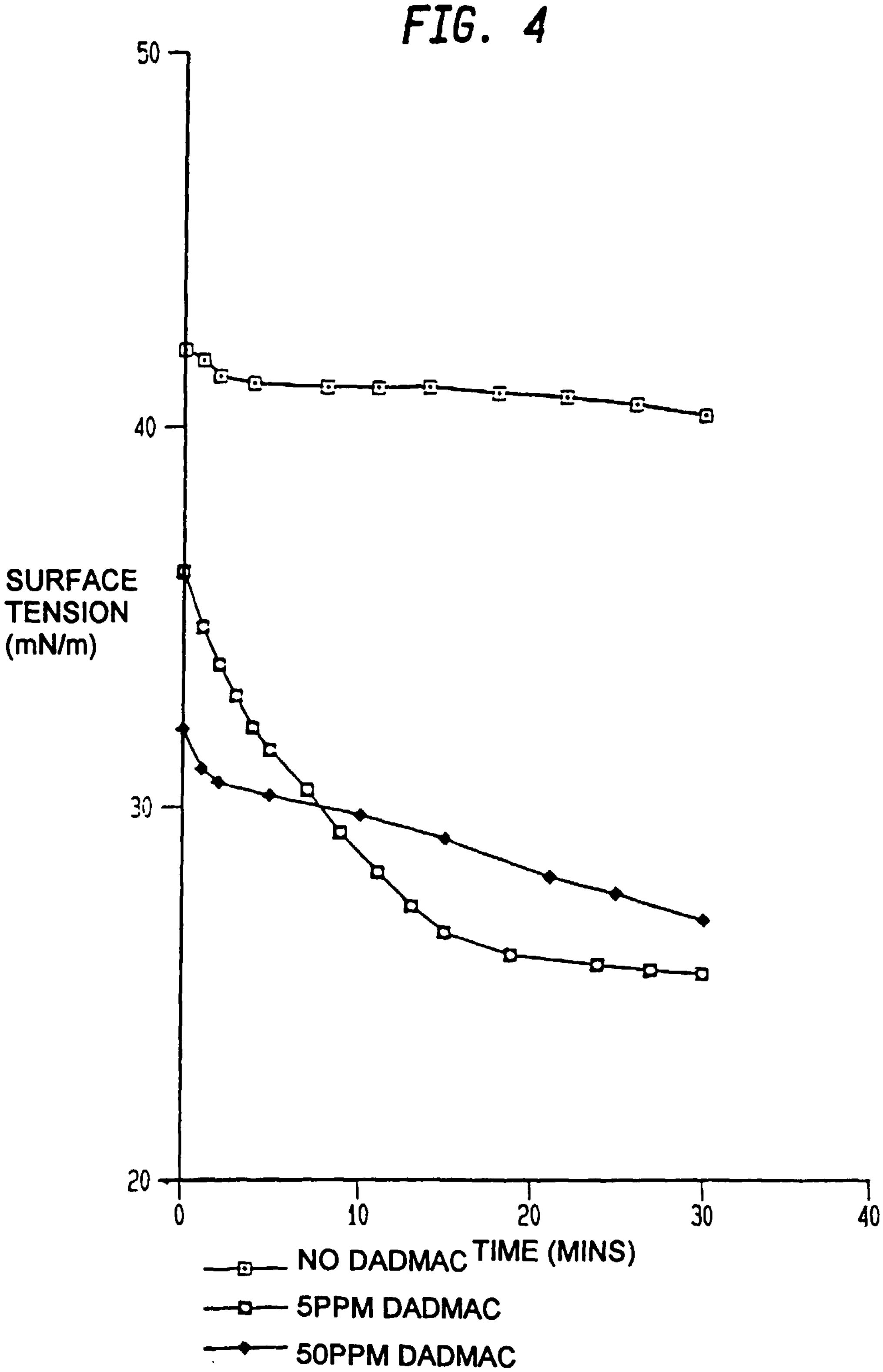
50
40
30
20
SURFACE
TENSION
(mN/m)
0
10
20
30
40
TIME (MINS)
NO DADMAC
5PPM DADMAC
50PPM DADMAC

FIG. 5

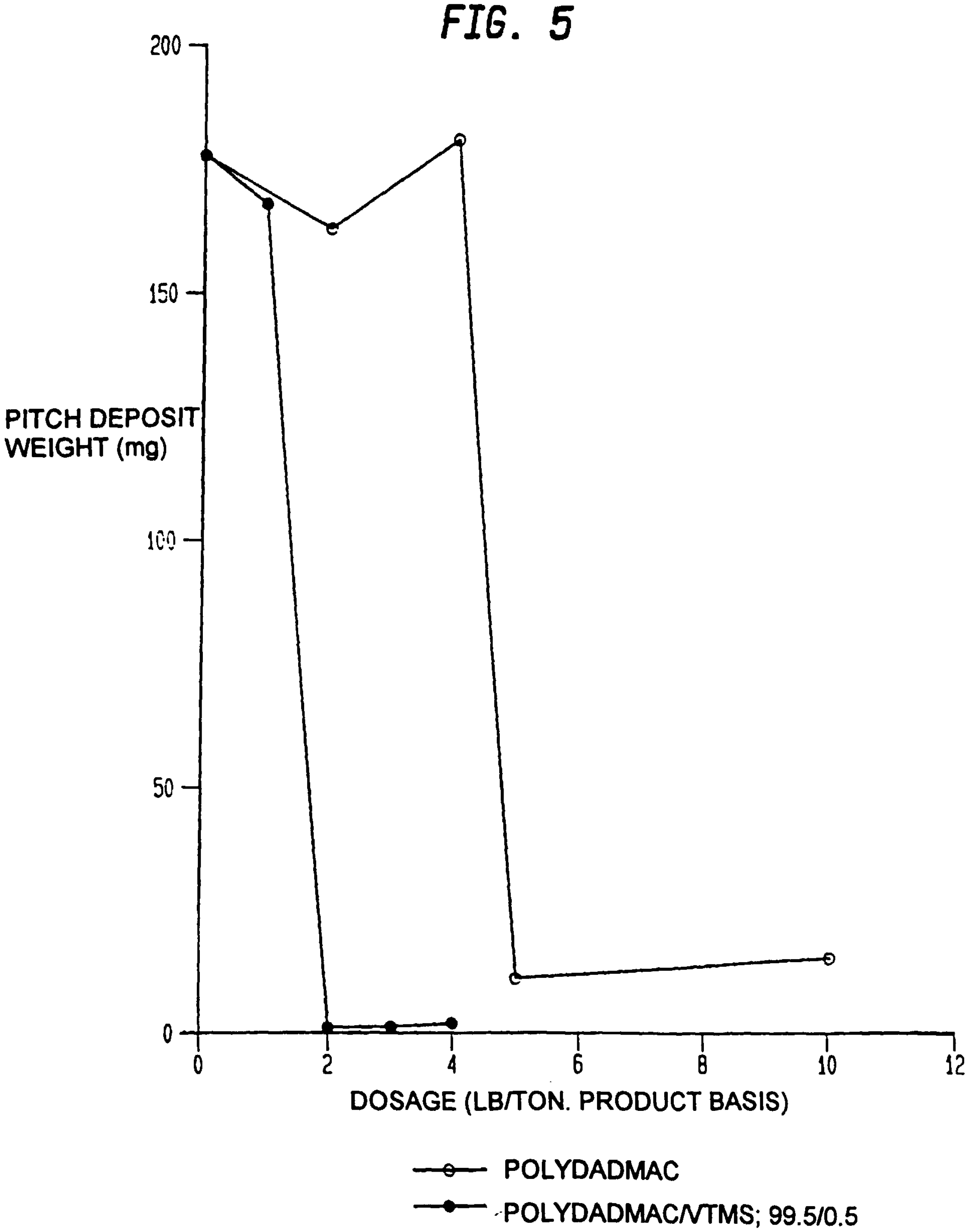
200
150
100
50
0
PITCH DEPOSIT WEIGHT (mg)
0
2
4
6
8
10
12
DOSAGE (LB/TON. PRODUCT BASIS)
POLYDADMAC
POLYDADMAC/VTMS; 99.5/0.5

FIG. 6

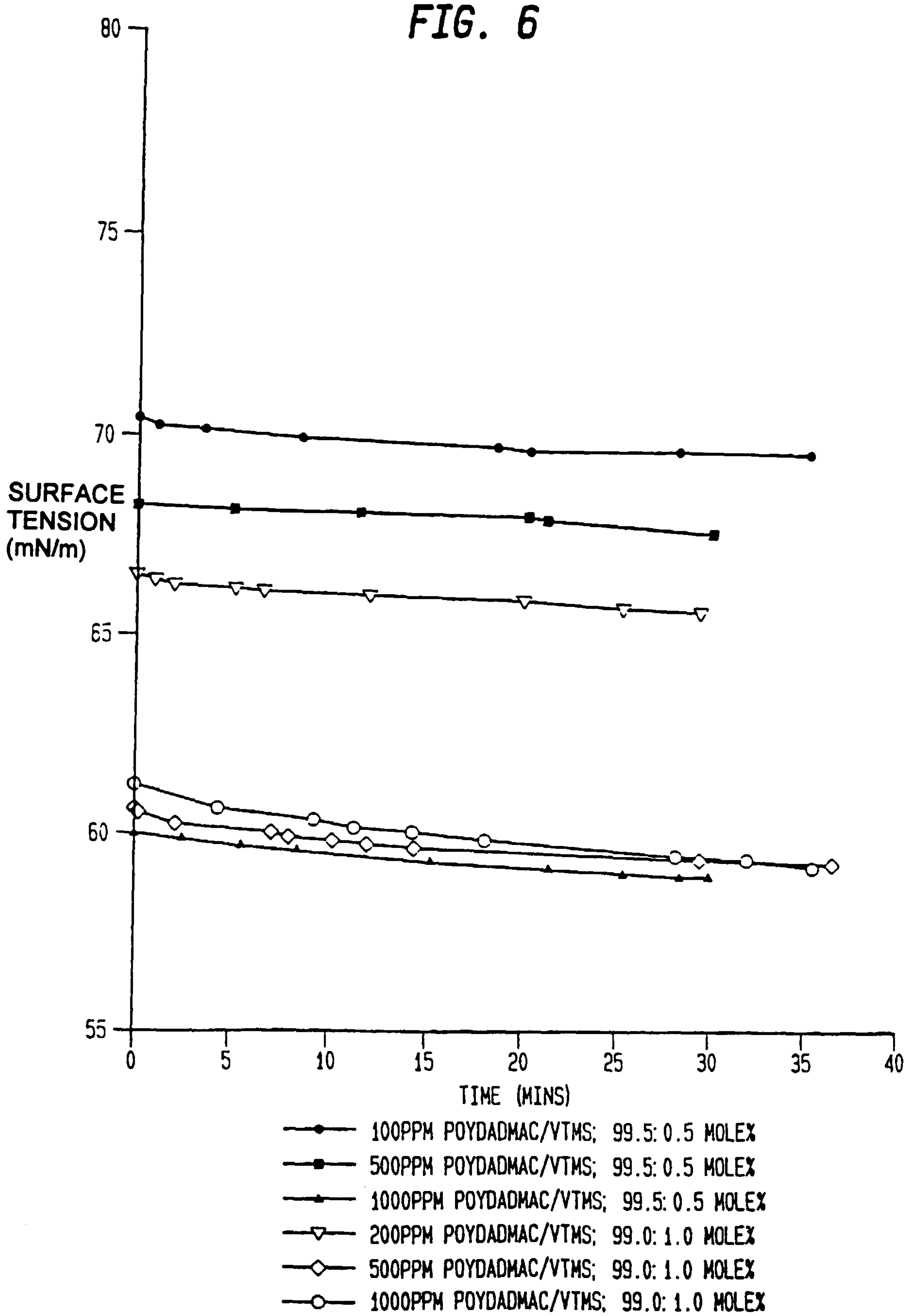

80
75
70
65
60
55
SURFACE TENSION (mN/m)
0
5
10
15
20
25
30
35
40
TIME (MINS)
100PPM POYDADMAC/VTMS; 99.5: 0.5 MOLE%
500PPM POYDADMAC/VTMS; 99.5: 0.5 MOLE%
1000PPM POYDADMAC/VTMS; 99.5: 0.5 MOLE%
200PPM POYDADMAC/VTMS; 99.0: 1.0 MOLE%
500PPM POYDADMAC/VTMS; 99.0: 1.0 MOLE%
1000PPM POYDADMAC/VTMS; 99.0: 1.0 MOLE%